# EUROPÄISCHE PATENTSCHRIFT

(11) **EP 2 728 374 B1**
(45) Veröffentlichungstag und Bekanntmachung des Hinweises auf die Patenterteilung: **28.12.2016**
(21) Anmeldenummer: 12190676.2
(22) Anmeldetag: 30.10.2012
(51) Int. Cl.: G01S 17/89, G01S 7/497

(54) **Erfindung betreffend die Hand-Auge-Kalibrierung von Kameras, insbesondere Tiefenbildkameras**
Invention relating to the hand-eye calibration of cameras, in particular depth image cameras
Invention concernant le calibrage main-oeil de caméras, en particulier de caméras à image de profondeur

(43) Veröffentlichungstag der Anmeldung: 07.05.2014
(73) Patentinhaber: Technische Universität Darmstadt, 64285 Darmstadt (DE)
(72) Erfinder: Willert, Volker, 63500 Seligenstadt (DE); Haumann, Dominik, 64646 Heppenheim (DE); Hartkopf, Stephan, 55122 Mainz (DE)
(74) Vertreter: Stumpf, Peter

(56) Entgegenhaltungen:
- JIYOUNG JUNG ET AL: "A novel 2.5D pattern for extrinsic calibration of tof and camera fusion system", INTELLIGENT ROBOTS AND SYSTEMS (IROS), 2011 IEEE/RSJ INTERNATIONAL CONFERENCE ON, IEEE, 25. September 2011 (2011-09-25), Seiten 3290-3296, XP032201310, DOI: 10.1109/IROS.2011.6095113 ISBN: 978-1-61284-454-1
- ULAND WONG ET AL: "Comparative evaluation of range sensing technologies for underground void modeling", INTELLIGENT ROBOTS AND SYSTEMS (IROS), 2011 IEEE/RSJ INTERNATIONAL CONFERENCE ON, IEEE, 25. September 2011 (2011-09-25), Seiten 3816-3823, XP032201135, DOI: 10.1109/IROS.2011.6094938 ISBN: 978-1-61284-454-1
- JOONGROCK KIM ET AL: "Registration method between ToF and color cameras for face recognition", INDUSTRIAL ELECTRONICS AND APPLICATIONS (ICIEA), 2011 6TH IEEE CONFERENCE ON, IEEE, 21. Juni 2011 (2011-06-21), Seiten 1977-1980, XP032006347, DOI: 10.1109/ICIEA.2011.5975916 ISBN: 978-1-4244-8754-7
- JIA WU ET AL: "Improved 3D Depth Image Estimation Algorithm for Visual Camera", IMAGE AND SIGNAL PROCESSING, 2009. CISP '09. 2ND INTERNATIONAL CONGRESS ON, IEEE, PISCATAWAY, NJ, USA, 17. Oktober 2009 (2009-10-17), Seiten 1-4, XP031557070, ISBN: 978-1-4244-4129-7
- FREDERIC GARCIA ET AL: "Real-Time Distance-Dependent Mapping for a Hybrid ToF Multi-Camera Rig", IEEE JOURNAL OF SELECTED TOPICS IN SIGNAL PROCESSING, IEEE, US, Bd. 6, Nr. 5, 1. September 2012 (2012-09-01), Seiten 425-436, XP011470904, ISSN: 1932-4553, DOI: 10.1109/JSTSP.2012.2207090
- SVENJA KAHN ET AL: "Fusing Real-Time Depth Imaging with High Precision Pose Estimation by a Measurement Arm", CYBERWORLDS (CW), 2012 INTERNATIONAL CONFERENCE ON, IEEE, 25. September 2012 (2012-09-25), Seiten 256-260, XP032265649, DOI: 10.1109/CW.2012.44 ISBN: 978-1-4673-2736-7

## Beschreibung

Die vorliegende Erfindung betrifft das Gebiet der Kalibrierung von Kameras, insbesondere 3D- oder Tiefenbild-Kameras (auch PMD- oder ToF-Kameras genannt), welche auf mobilen Systemen, wie z.B. und nicht abschließend Robotern, Roboterarmen, Autos, Flugzeugen, unbemannten Flug- oder Fahrzeugen angebracht sind.

Tiefenbildkameras haben den Vorteil in einem Bild auch direkt das Abstandsprofil zu einer aufgenommenen Szene liefern zu können, d.h. ohne die Notwendigkeit eines bereichsweisen Aufnahme-/Abtastvorgangs (Scannen).

Bei all diesen Systemen ergibt sich das Problem, dass das Koordinatensystem des mobilen Systems (z.B. Roboterarmes) mit dem der Kamera darauf abgeglichen werden muss, um im nachfolgenden, dauerhaften Betrieb des Systems dafür zu sorgen, dass das System durch die Kamera exakt positioniert wird. D.h. die Kamera muss die räumlichen Bewegungen des Systems exakt steuern und etwaige Kollisionen vermeiden.

### Stand der Technik

### 1. Einleitung des allgemeinen Gebietes der Erfindung

a) Aufgabengebiete/Einbettung der Kalibriermethode: Es gibt eine Vielzahl an technischen Anwendungen, wo eine Kamera auf einem mobilen System angebracht ist, um Aufgaben mit dem mobilen System anhand der Kameradaten zu lösen. Typische mobile Systeme sind: Roboterarm, Auto, Flugzeug, mobiler Roboter (z.B. UGV = unmanned ground vehicle, UAV = unmanned aerial vehicle etc.), etc. Im Folgenden verwenden wir den Begriff Roboter für alle möglichen mobilen Systeme. Typische Fähigkeiten, die ein solcher Roboter besitzen kann und die auf der Auswertung von Bilddaten beruhen können, sind:
   - Die Positionsbestimmung des Roboters im Raum (visual self-localisation / visual odometry),
   - Positionieren des Roboters im Raum bzw. das Nachfahren von vorgegebenen Bahnen im Raum (visual servoing),
   - 3D Kartenerstellung bzw. 3D Rekonstruktion der Szene (visual mapping),
   - etc.

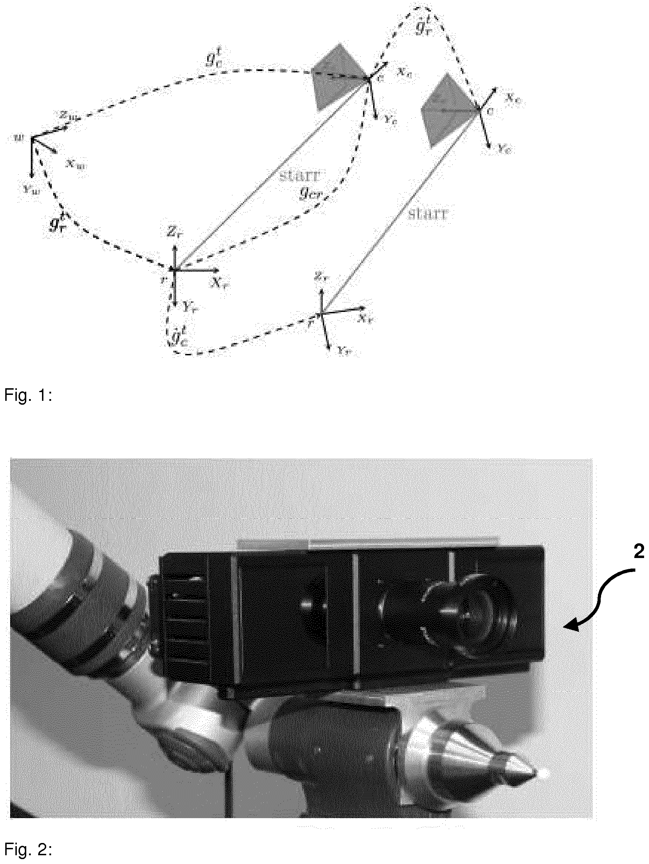

   Mithilfe dieser Fähigkeiten kann der Roboter unterschiedlichste Aufgaben erfüllen:
   - das Lokalisieren und Verfolgen,
   - das Vermessen und Rekonstruieren,
   - das Inspizieren,
   - das Manipulieren,
   - etc.
   eines Werkstücks, Objektes, Hindernisses, etc. im Raum anhand der Bilddaten des Kamerasystems.
b) Zu kalibrierende Größen: Für die genannten Fähigkeiten und damit verbundenen Aufgaben muss vor Betrieb die genaue Relativlage zwischen Roboterkoordinatensystem rund Kamerakoordinatensystem c bekannt sein. Nur dann kann ein Bezug zwischen den Messergebnissen aus den im Kamerakoordinatensystem ausgewerteten Kameradaten und den Koordinaten des Roboters bezüglich des Roboterkoordinatensystems hergestellt werden. Es wird davon ausgegangen, dass diese Relativlage während des Betriebes nicht bewusst verändert wird bzw. Änderungen aufgrund von z.B. Vibrationen ausgeglichen werden können.
c) Begriffe/Notation: Die Relativlage eines Kamerakoordinatensystems bezüglich eines Roboterkoordinatensystems ist durch einen Translationsvektor *T_cr* und eine Rotationsmatrix *R_cr* im 3D Raum gegeben. Sie wird bei Handhabungsautomaten und Robotern und auch im Folgenden im Begriff Relativpose *g_cr* := {T_*cr*, R_*cr*} zusammengefasst. Die absolute Lage eines Koordinatensystems sowohl einer Kamera, als auch eines Roboters wird bezüglich eines fixen Weltkoordinatensystems *w* angegeben und ist durch eine Position T_c(t) bzw.T_r(t) und eine Orientierung im Raum R_c(t) bzw. R_r(t) zu einem bestimmten Zeitpunkt t gegeben. Position und Orientierung werden im Folgenden im Begriff Pose g_c(t) bzw. g_r(t) zusammengefasst.
d) Folgen für ein unkalibriertes System: Ist die Relativpose g cr nicht genau bestimmt, können sowohl Pose g_r(t) und Posenänderung dg_r(t) := {dT_r(t), dR_r(t)} des Roboters anhand der Kamerapose bzw. -posenänderung, als auch Pose g_c(t) und Posenänderung dg_c(t) := {dT_c(t), dR_c(t)} der Kamera anhand der Roboterpose bzw. -posenänderung nicht genau bestimmt werden, da eine genaue geometrische Beziehung zwischen den Koordinatensystemen fehlt.
e) Definition der Kalibriermethode: Ein Verfahren zur Bestimmung dieser über der Zeit konstanten Relativpose g_cr nennt man in der Robotik Hand-Auge Kalibrierung. Die Beziehungen zwischen den einzelnen Koordinatensystemen können Abbildung 1 entnommen werden. Abbildung 2 zeigt ein Beispiel für ein System, dass eine Hand-Auge-Kalibrierung benötigt. Zu sehen ist ein Faro Messarm mit weißer kugelförmiger Messspitze mit montierter PMD Tiefenkamera. Hier wäre die Relativpose zwischen dem Kamerakoordinatensystem der PMD Tiefenkamera und den Koordinaten der Messspitze zu ermitteln.

JIYOUNG JUNG ET AL: "A novel 2.5D pattern for extrinsiccalibration of of and camera fusion system" offenbart ein Kalibrierverfahren zur Zusammenführung der Daten einer hochauflösenden Kamera und einer Tiefen-Kamera (time-of-flight-, ToF- Kamera). Die Kalibrierung zur Aufstellung der Transformationsmatrix wird mittels einer Lochplatte durchgeführt. Diese Lochplatte ersetzt das sonst üblicherweise verwendete Schachbrett-Muster (Seite 3290, Seite 3291).

Der in ULAND WONG ET AL: "Comparative evaluation of range sensing technologies for underground void modeling" gezeigte Kalibrierkörper benutzt ein dreidimensionales Schachbrettmuster mit hochstehenden Würfeln und einigen Pyramiden. Diese Oberfläche ist aber sowohl symmetrisch als auch nicht stetig differenzierbar im vorliegenden Zusammenhang.

### 2. Stand der Technik der Hand -Auge-Kalibrierung

Die Hand-Auge-Kalibrierung wird hauptsächlich in der industriellen Robotik benötigt. Dort werden Roboter mit Manipulatoren eingesetzt, die präzise Bewegungen zur Fertigung oder Montage von Bauteilen ausführen müssen. Zur genauen Positionierung des Roboters muss die Relativpose zwischen Kamera und Roboterarm bekannt sein. Methode: Die Bestimmung der Relativpose g_cr = {T_cr, R_cr} kann über zwei unterschiedliche Messverfahren erreicht werden [38]: 1) Über die gleichzeitige Messung von Relativposen zu unterschiedlichen Zeiten t, genauer gesagt, der Posenänderung des Roboterkoordinatensystems dg_r(t)= { dT_r(t),R_r(t)} und des Kamerakoordinatensystems g_c(t)= {dT_c(t) ,dR c(t)} oder 2) über die gleichzeitige Messung von Absolutposen zu unterschiedlichen Zeiten t, genauer gesagt, der Roboterpose g_r(t)= {T_r(t), R_r(t)} und der Kamerapose g_c(t)= {T_c(t), R_c(t)}.

Die Posenänderungen bzw. die Absolutposen sind in Abbildung 1 angegeben. Je genauer die Posenänderungen bzw. Absolutposen gemessen werden können, desto genauer kann die gesuchte Relativpose bestimmt werden.

### 2.1 Bestimmen der Absolutpose bzw. der Posenänderung des Roboterkoordinatensystems

Es gibt mehrere Möglichkeiten die Posenänderung des Roboterkoordinatensystems zu bestimmen. Die erste Möglichkeit benutzt die robotereigene, in diesen integrierte Messeinrichtung. Diese Messeinrichtung beinhaltet vorzugsweise die Winkelsensoren in den Achsantrieben des Roboters [16]. Eine weitere Möglichkeit ist die Vermessung der Position des Roboterarmes durch ein feststehendes den Roboterarm beobachtendes Messsystem, z.B. einem Kamerasystem. Dazu muss dieses Messsystem den Roboterarm zu jedem Zeitpunkt erfassen können, z.B. immer im Blickfeld des zu vermessenden Kamerasystems verbleiben. In den meisten Fällen kann davon ausgegangen werden, dass die Absolutpose bzw. die Posenänderung des Roboterkoordinatensystems sehr genau bestimmt werden kann (üblicherweise Millimetergenauigkeit) bzw. dass die Roboterpose wesentlich genauer bestimmt werden kann als die Absolutpose bzw. die Posenänderung des Kamerakoordinatensystems (üblicherweise zwischen Millimeter- und Zentimetergenauigkeit) [38]. Eine Verbesserung der Genauigkeit der Posenänderung des Roboterkoordinatensystems ist deswegen nicht Gegenstand der Erfindung. Es wird davon ausgegangen, dass die Roboterpose als fehlerfrei angenommen werden kann bzw. im Toleranzbereich liegt.

### 2.2 Bestimmen der Absolutpose bzw. der Posenänderung des Kamerakoordinatensystems

Der momentane Stand der Technik konzentriert sich auf die Hand-Auge-Kalibrierung von Robotern, die mit klassischen bildgebenden Sensoren ausgestattet sind, z.B. CCD-Kameras. Das bedeutet, die Messdaten, die zur Bestimmung der Posenänderung des Kamerakoordinatensystems benutzt werden, sind zweidimensionale Abbilder der Reflexionen des sichtbaren Lichtes, also 2D-Projektionen der 3D Szene im Sichtfeld der Kamera. Eine Berechnung der gesuchten Posenänderung des Kamerakoordinatensystems geschieht anhand von visuellen Markern (z.B. ein Schachbrettmuster mit bekannten Abmaßen), wie es üblicherweise in der Bildverarbeitung praktiziert wird. Eine Übersicht von Verfahren gibt [19]. Es gilt: Alle Verfahren die auf Bilddaten basieren, müssen visuelle Marker im Bild extrahieren. Entweder die 3D-Maße dieser visuellen Marker sind bekannt, dann kann die Absolutpose der Kamera bezüglich des Markerkoordinatensystems über den räumlichen Rückwärtsschnitt berechnet werden. Die Posenänderung ergibt sich dann entsprechend aus der Differenz der Einzelposen zwischen unterschiedlichen Ansichten des gleichen Markers [16]. Oder die Posenänderung wird durch eine Korrespondenzsuche von projizierten visuellen Markern zwischen zwei aufeinanderfolgenden Kamerabildern bestimmt. Fehlerquellen bei visuellen Markern: Die erzielbare Genauigkeit der Erfassung der Pose ist durch die optische Qualität der Kamera (dazu gehören Kontrastauflösung und Pixelauflösung), die Güte der intrinsischen Kalibrierung der Kamera, die Genauigkeit der Bestimmung der Lage der Marken bzw. deren präzise Anbringung an bekannten Orten in der Welt und die Qualität der Bildverarbeitung eingeschränkt. Zudem ist es sehr aufwendig, in realen Fertigungsumgebungen optische Marken in ausreichender Zahl anzubringen und vor Beginn einer Roboterprogrammierung - manuell - zu vermessen [16]. Insbesondere die Kontrast- und Pixelauflösung der Kamera beeinflusst die Genauigkeit der Posenbestimmung. Denn, je besser der Kontrast und je höher die Pixelauflösung, desto genauer können die Bildkoordinaten der projizierten visuellen Marker bestimmt werden. Die Genauigkeit der Berechnung der gesuchten Posenänderung des Kamerakoordinatensystems ist von der Genauigkeit der extrahierten Bildkoordinaten abhängig. Je genauer die Bestimmung der Bildkoordinaten erfolgt, desto genauer wird die Bestimmung der Absolutpose bzw. der Posenänderung. Da die Pixelauflösung von Tiefenbildkameras im Vergleich zu CCD Kameras sehr gering ist, wird hier ein Verfahren zur Bestimmung der Posenänderung des Kamerakoordinatensystems vorgeschlagen, das keine visuellen Marker des 2D Abbildes der Kamera benutzt.

### 2.3 Auflösen nach der Relativpose

Erste Überlegungen zur Berechnung der gesuchten Transformation wurden in [37] aufgestellt. Daraus entwickelte sich das noch immer aktuelle Standardverfahren. Prinzipiell wird bei diesen Methoden versucht aus der bekannten Bewegung von Kamera und Roboter ein Gleichungssystem der Art AX = XB aufzustellen und zu lösen. Aus diesem Verfahren wurden viele weiterführende Ansätze und Verbesserungen entwickelt. Die Grundstruktur der Lösung des Gleichungssystems aus der einzelnen Bewegung bleibt meist gleich. Abwandlungen sind in der mathematischen Herangehensweise anzutreffen. So wird in [31] untersucht, inwieweit die Benutzung der Lie-Theorie eine Verbesserung darstellt. Der Ansatz von [6] beschäftigt sich mit Quaternionen und analysiert die Fehlerminimierung bei der Lösung des Gleichungssystems. Erweiternd dazu stellt die Arbeit von [1] den Einsatz von Dual-Quaternionen und dem Kronecker Produkt dar. Allen Ansätzen gemein ist die sukzessive Berechnung der Transformation. Die Transformation teilt sich auf in die Rotation und die Translation der Kamera im Bezug zum Roboter. Nach dem Standardalgorithmus von [39], wird erst die Rotation und anschließend die Translation berechnet. Eine abweichende Betrachtung wird in [40] beschrieben, wonach eine parallele Berechnung beider Anteile der Transformation hergeleitet werden kann. Dieser Ansatz beschreibt das Problem in dem Gleichungssystem AX = ZB, welcher als weitere Möglichkeit in der Literatur zu finden ist. Für beide Ansätze wurden nichtlineare Optimierungsansätze vorgeschlagen, welche die Fehlerverteilung der fehlerbehafteten Kamera- und Roboterposenmessungen berücksichtigt [38]. Die Lösungen zur Berechnung der Transformation beziehen sich größtenteils auf Industrieroboter mit beweglichen Armen bzw. Manipulatoren. Eine

Übertragung der Ergebnisse auf sich bewegende Robotersysteme ist jedoch ohne weiteres möglich, wie in [20] und [5] gezeigt wird. Eine Verbesserung des Optimierungsverfahrens zum Auflösen nach der Relativpose ist nicht Gegenstand der Erfindung.

### 3 Funktionsweise(n) einer Tiefenbildkamera

Eine Tiefenbildkamera ermöglicht die einfache Erzeugung von 3D-Daten von Oberflächen und Objekten. Dabei stehen die Kameradaten als Tiefeninformation mit einer Bildwiederholfrequenz von bis zu 20 Hz in Echtzeit zur Verfügung. Andere Bezeichnungen für diese Art der Kamera sind auch Time-of-Flight Kameras (TOF-Kamera), Photo Mixing Device Kamera (PMD Kamera) oder RGB-D-Sensoren. Vom Grundaufbau ist eine Tiefenbildkamera eine aktive Kamera, da eine Infrarotlichtquelle als aktive Beleuchtung gebraucht wird. Es gibt zwei unterschiedliche Verfahren der Entfernungsmessung basierend auf einer aktiven Beleuchtung:
Funktionsweise 1: Das Kamerasystem besteht aus einer Infrarotlichtquelle und einer Empfangseinheit. Die Quelle sendet moduliertes Infrarotlicht mit einer festen Frequenz aus, welches am Objekt reflektiert wird und in einem Sensor wieder empfangen und verarbeitet wird. Dieser Sensor, auch Photo Mixing Device (PMD) genannt, besteht aus einer Matrix von lichtempfindlichen Halbleiter-Einzelsensoren, die das Bild der Kamera pixelweise ergeben. Zu jedem dieser Pixel wird durch die Bestimmung der Phasenverschiebung zwischen ausgesendetem und empfangenem modulierten Infrarotlicht mit bekannter Frequenz die aktuelle Entfernung des Objektbereiches berechnet, an dem der eintreffende Infrarotstrahl reflektiert wurde. Als Ergebnis liefert eine PMD-Kamera somit ein Entfernungsprofil des Szenenausschnittes im Sichtfeld der Kamera und eine Bildmatrix, welche den Intensitätsverlauf der reflektierten Infrarotstrahlen dieses Szenenausschnittes anzeigt.
Funktionsweise 2: Das Kamerasystem besteht aus einem Infrarotlichtprojektor und einer Infrarotkamera. Der Infrarotprojektor projiziert ein bekanntes Muster (üblicherweise Punkte oder Streifen) auf die Szene. Die Infrarotkamera nimmt das durch das Entfernungsprofil verzerrte Muster auf und aus den Verzerrungen kann dann das Entfernungsprofil rekonstruiert werden.

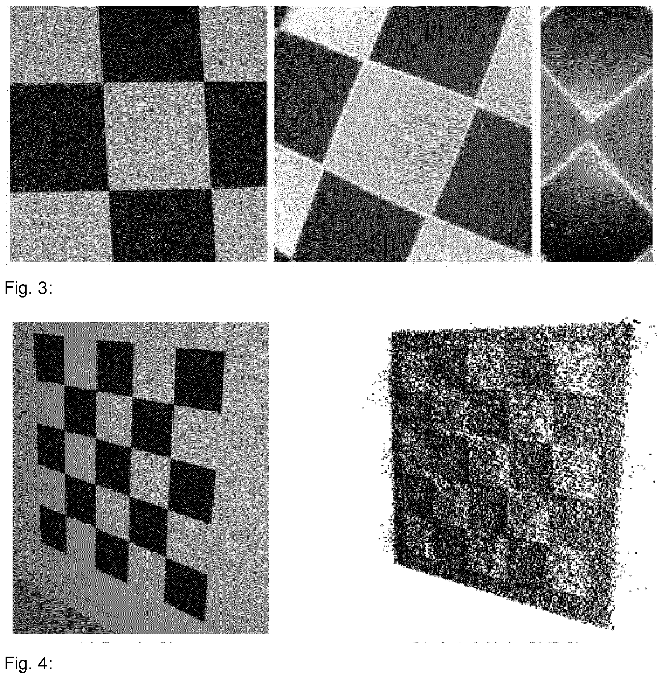

Möglichkeiten der Hand-Auge-Kalibrierung einer Tiefenbildkamera: Bei beiden Kamerasystemen kann das Infrarot-Intensitätsbild benutzt werden, um mit einem oder mehreren visuellen Markern für den Infrarotlichtbereich die Posenänderung des Kamerakoordinatensystems über den klassischen Weg genau wie bei normalen 2D Kameras für den sichtbaren Frequenzbereich zu berechnen (siehe 2.2). Das Problem dabei ist, dass sowohl die Kontrastauflösung bzw. die Bildschärfe als auch die Pixelauflösung des Infrarot-Intensitätsbildes/Amplitudenbildes geringer als bei normalen Kameras ausfällt. Deswegen kann für Tiefenbildkameras nicht die gleiche Genauigkeit bei der Bestimmung der Posenänderung des Kamerakoordinatensystems über visuelle Marker erreicht werden, wie das bei 2D Kameras für sichtbares Licht der Fall ist. Dies wird in Abbildung 3 verdeutlicht. Schlussfolgerung 1: Da Tiefenbildkameras zusätzlich eine Entfernungsmessung für jeden Kamerapixel liefern, wird in dieser Erfindung ein Verfahren vorgeschlagen, welches zur Bestimmung der Posenänderung des Kamerakoordinatensystems die Entfernungsmessungen und das Intensitätsbild benutzt. Das Problem dabei ist, dass sowohl die Entfernungsmessungen als auch das Verfahren zur Bestimmung der Posenänderung anhand von Entfernungsmessungen von unterschiedlichen Fehlerquellen betroffen sind.

Eine Verbesserung der Genauigkeit der Absolutpose bzw. der Posenänderung des Kamerakoordinatensystems einer Tiefenbildkamera auf Basis des Amplitudenbildes (Reflexionsstärke) und des gemessenen Entfernungsprofils ist Gegenstand der Erfindung. Es werden keine Marker im Amplitudenbild gesucht und ein Verfahren analog zur Hand-Auge-Kalibrierung mit visuellen Markern benutzt.

### 3.1 Fehlerquellen einer Tiefenbildkamera

Tiefenbildkameras eröffnen durch die Information des Abstandes viele Möglichkeiten. Der große Vorteil ist die Tatsache, dass Tiefeninformationen einer Szene als Kamerabild in einer hohen Datenrate ausgelesen und verarbeitet werden können. Jedoch hat diese Technologie auch eine Vielzahl an Fehlerquellen, wie in [34] dargestellt wird. Ein erster Ansatz zur Fehlerminimierung kann über diverse Filter erfolgen. In [24] und [21] sind einige Möglichkeiten aufgezeigt. Dazu ist die Erstellung eines Sensormodells sinnvoll, was [23] beschreiben.

Zur Vermeidung von Fehlern sind die genauen Eigenschaften und Wirkprinzipien der Tiefenbildkamera zu untersuchen. Mit der Hilfe mathematischer Untersuchungen und der Auswertung diverser Experimente können einige Problemstellungen deutlicher beschrieben werden. So ist die Reflexion der betrachteten Objekte eine häufige Fehlerquelle, was die Arbeiten [18], [32] und [33] aufzeigen. Ebenso ist der Einfluss der Farbe der Gegenstände mit einzubeziehen. Laut [30] treten bei hohen Farbkontrasten Abweichungen von mehreren Millimetern auf.

Da die Tiefenbildkamera eine aktive Signalquelle besitzt, welche die Umgebung ausleuchtet, kann es zu Problemen mit Signalüberlagerungen kommen. Nach [10] und [11] tritt dieser Effekt je nach Geometrie und Umgebung deutlicher in Erscheinung. Im Bezug auf die Geometrie sind Objektkanten eine Fehlerquelle, die auch mit anderen Sensoren detektiert und vermindert werden können. An Kanten besteht ein Problem der Mehrdeutigkeit, weil die Kamera in dieser Situation keine exakten Übergänge mehr darstellen kann. [12] und [15] beschreiben eine Lösung, die auf einer simultanen Kantenerkennung im zweidimensionalen Intensitätsbild der Tiefenbildkamera beruht. Untersuchungen von [22] und [13] ergeben, dass auch die aktive Ausleuchtung durch LEDs eine Fehlerquelle darstellt. Sie erläutern in ihrer Arbeit Lösungswege sowie ein Fehlermodell. Weitere technische Eigenschaften und der Einfluss des Wetters werden in [29] näher betrachtet.

Für eine Kalibrierung der Tiefenbildkamera lassen sich Laborbedingungen schaffen, die mögliche Fehler auf ein Minimum reduzieren. Dazu werden Kalibrierkörper mit besonderen Eigenschaften benutzt. Mit Kenntnis der Fehlerquellen kann durch den Bau des Testkörpers ein erheblicher Einfluss auf die Genauigkeit des Ergebnisses der extrinsischen Kalibrierung genommen werden. Dies ist Gegenstand der Erfindung.

### 3.1.1 Reflexion

Infrarotlicht wird von der Tiefenbildkamera aktiv ausgesendet, an dem zu beobachtenden Objekt reflektiert und wieder in der Kamera empfangen und ausgewertet. Dabei spielen die Reflexionseigenschaften des beobachteten Objektes eine große Rolle. Je nach Oberflächenbeschaffenheit, Farbe und Form des Objektes ergeben sich verschiedene Reflexionseigenschaften des Infrarotlichtes. Daraus folgt, dass die empfangene Intensität des empfangenen Lichtes variiert. Da sich die Tiefeninformation unter anderem aus der Intensität berechnet, kommt es zu unterschiedlichen Werten je nach Objekteigenschaften. Für Szenen mit Objekten, die gleiche und homogene Reflexionseigenschaften besitzen, können die Abweichungen zu den realen Tiefeninformationen heraus gerechnet werden. Aber gerade bei Szenen mit Objekten, die unterschiedliche Reflexionseigenschaften für das Infrarotlicht haben, werden die Tiefeninformationen verfälscht. Glatte Oberflächen, wie z.B. poliertes Metall oder Kunststoff, reflektieren sehr stark. Sind in einer Szene solche Objekte neben Objekten mit rauerer Oberfläche vertreten, sind die Tiefenwerte im Vergleich zu den realen Entfernungen mit Fehlern behaftet. Dies tritt ebenso auf, wenn Farbe oder Kontrast der Objekte unterschiedlich ist. Am Beispiel eines Schachbrettmusters mit deutlichen Unterschieden zwischen weißen und schwarzen Bereichen auf einer ebenen Platte ist dies in Abb. 4a und Abb. 4b dargestellt. An den unterschiedlichen Tiefenwerten in Abb. 4b ist das Problem erkennbar. Eigentlich sollte aus den Tiefeninformationen eine planare Ebene resultieren wie dies auf dem Farbfoto nach Abb.4a zu erkennen ist.

Zur Lösung genannter Probleme existieren Ansätze, die anhand der Intensität versuchen auf die Reflexionseigenschaften und die Beschaffenheit der beobachteten Objekte zu schließen. Mit diesen Informationen können die Tiefeninformationen nachträglich korrigiert werden. Dies wird z.B. in [18], [32] und [33] dargestellt. Ein weiterer Effekt, der bei Tiefenbildkameras beobachtet werden kann, sind multiple Reflexionen die das Ergebnis verschlechtern. Im theoretischen Fall wird das ausgesendete Infrarotsignal der Kamera direkt am Objekt reflektiert und gelangt dann zurück zur Kamera. Das Signal nimmt somit den direkten Weg zwischen Kamera und Objekt.

Eine reale Szene besteht aber im Allgemeinen aus mehreren Objekten, welche alle von der Kamera ausgeleuchtet werden. Das zum Objekt ausgesendete Signal kann demnach nicht nur den direkten Weg zum Objekt und zurück zur Kamera nehmen, sondern über Reflexionen an anderen Objekten in der Szene weitere, längere Wege zurück legen. Die Kamera empfängt nun die Überlagerung aus dem direkt reflektierten Signal und dem Signal, dass über mehrere Wege über eine längere Laufzeit zurück zur Kamera gelangt. Es ist im Nachhinein nicht mehr möglich die unterschiedlichen Signale zu trennen.

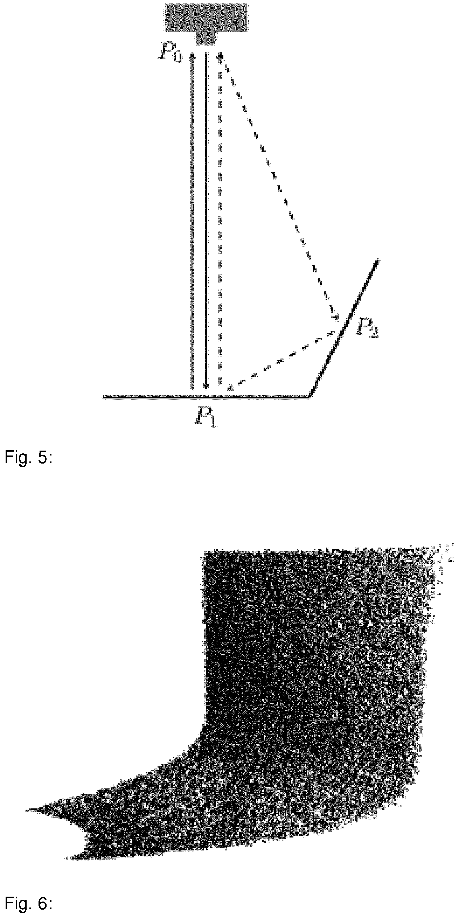

In Abb. 5 ist eine Ecke mit den Laufwegen des Infrarotsignals eingezeichnet. Das Signal des direkten Pfades (P0 - P1 - P0) überlagert sich in der Kamera mit dem längeren Pfad (P0 - P2 - P1 - P0). Als Ergebnis der Tiefenbildkamera ergeben sich fließende Übergänge und abgerundete Ecken, wie Abb. 6 zu entnehmen ist. Dargestellt ist die Sicht der PMD-Kamera auf eine Platte, welche senkrecht auf dem Fußboden steht. Dieses Problem der Signalüberlagerung durch mehrere benutzte Wege (engl. multipath problem) lässt sich vermindern durch die Benutzung von Lichtmustern (engl. structured light) oder Mustern auf dem Objekt und Analyse dieser Muster. In [10] und [11] wird solch ein Vorgehen mit einer PMD-Kamera durchgeführt. Weitergehend ist darauf zu achten, dass in kontrollierten Laborbedingungen die Umwelt frei von stark reflektierenden Objekten ist. Diese müssen nicht einmal direkt angestrahlt werden um Verfälschungen der Tiefenwerte der Kamera zu erzeugen.

Neben der Problematik der multiplen Reflexionen an Objekten können auch weitere aktive Störquellen Probleme und Messfehler verursachen. Da Sonnenlicht einen großen Anteil an Infrarotstrahlung enthält, muss auch direkte oder indirekte Sonneneinstrahlung als Störquelle interpretiert werden. Es ergibt sich erneut der Effekt, dass das Nutzsignal mit dem Störsignal, wie z.B. der Sonneneinstrahlung, überlagert wird und später nicht mehr getrennt werden kann.

Eine in vielen aktuellen Tiefenbildkameras eingesetzte Lösung dieses Problems der konstanten Signalüberlagerung kann ohne weitere Hilfsmittel erreicht werden. Die aktive Beleuchtung der Kamera wird für kurze Intervalle ausgeschaltet und das resultierende Fremdlicht gemessen. In einem zweiten Schritt wird die Ampltude ermittelt und als Fehlerwert gespeichert. Bei aktiver Beleuchtung der Szene durch die Kamera kann der Fehler, welcher durch das Fremdlicht erzeugt wird, kompensiert werden. Um Messfehler aufgrund variierender Reflexionseigenschaften zu reduzieren wird in dieser Erfindung ein Kalibrierkörper mit gleichbleibenden Reflexionseigenschaften vorgeschlagen. Mehrfachreflexionen werden durch das freie Aufstellen des Kalibrierkörpers auf Stützfüßen und ein Anschließendes Freischneiden der 3D Punkte, die zum Kalibrierkörper gehören, reduziert.

### 3.1.2 Integrationszeit

Bei der mathematischen Beschreibung zur Berechnung des Abstandes aus der Phasenverschiebung wird die Integrationszeit benötigt. Diese kann vom Benutzer der Kamera je nach Umgebung angepasst werden. Die Integrationszeit kann vereinfacht ausgedrückt mit der Zeiteinstellung einer Fotokamera aus dem Alltag verglichen werden. Je größer die Integrationszeit eingestellt ist, umso mehr Information in Form von Licht wird verarbeitet. Diese Einstellmöglichkeit hat den Vorteil, dass weit entfernte Objekte mit schwacher Reflexion des Infrarotlichtes dennoch gut dargestellt werden können. Der Nachteil ist als Überbelichtung ebenso aus der Fotografie bekannt. Sollte die Integrationszeit zu hoch eingestellt werden, tritt bei nahen Objekten Sättigung beim Sensorchip ein und es kann keine brauchbare Information gewonnen werden. Das Gegenteil, eine zu kurze Integrationszeit bei entfernten Objekten, ist ebenso nachteilig, da sehr wenig reflektiertes Licht des Objektes empfangen wird und das Rauschen anderer Quellen überwiegt. Demzufolge muss für die Integrationszeit ein Kompromiss gefunden werden je nach aktueller Szene.

Auf den Tiefenwerten, die die PMD-Kamera liefert, ist zusätzlich ein additiver konstanter Offset vorhanden. Dieser Offset variiert je nachdem welche Integrationszeit gewählt wird. Die Gründe dieses systematischen Fehlers sind noch nicht vollkommen erforscht, haben aber nach ersten Erkenntnissen nach [34] ihren Ursprung in der Ansteuerelektronik und den LEDs. Zur Kompensation dieses Fehlers kann durch Versuche eine Look-up Tabelle erstellt werden, nach derer die Tiefenwerte korrigiert werden. Um Messfehler aufgrund des Entfernungsprofils des Kalibrierkörpers zu reduzieren, wird in dieser Erfindung eine Mehrbildaufnahmetechnik mit unterschiedlichen Integrationszeiten vorgeschlagen.

### 3.1.3 Mehrdeutigkeit

Für die Tiefenbildkamera existiert eine maximale Reichweite, bis zu der eindeutige Ergebnisse bereitgestellt werden können. Diese Reichweitenbegrenzung erschließt sich aus der Technik zur Messung der Distanz über die Phasenverschiebung zwischen Referenzsignal und empfangenem Signal. Eine eindeutige Zuordnung des Phasenwinkels bei dem eingesetzten sinusförmigen Signal ist bis zu einem maximalen Winkel von φ_max = 2π möglich. Die Distanz kann über den Phasenwinkel berechnet werden. Bei einer Modulationsfrequenz von v = 20MHz und der Definition der Lichtgeschwindigkeit c_licht = 3 x 10⁸ m/s kann über d_max = (φ_max x c_licht) / 4πv = c_licht / 2v die maximale Distanz von 7,5m errechnet werden. Zur Erweiterung der Reichweite kann eine andere Modulation mit verschiedenen Wellenlängen oder Codewörtern eingesetzt werden. Damit können Eindeutigkeitsbereiche bis zu 500 m realisiert werden.

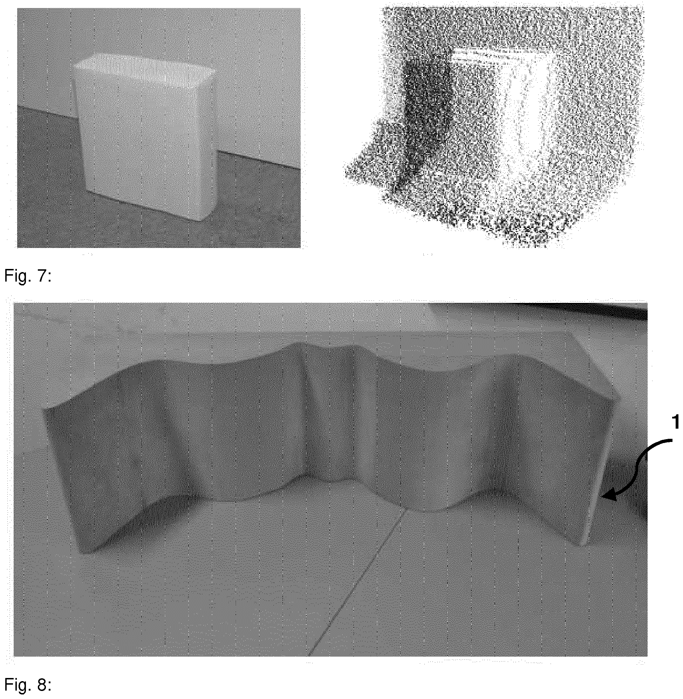

Mehrdeutigkeiten der Tiefeninformation treten ebenso auf bei der Repräsentation von Objektkanten. Solche Kanten, dargestellt durch nicht stetige Übergänge in den Tiefenwerten, stellen ein Problem für die Tiefenbildkamera dar, weil keine eindeutigen Werte verfügbar sind. Zur Anschauung ist als Beispiel nach Abb. 7a eine Box vor einer Wand aufgestellt und die Kamera davor filmt diese Szene. An den Seiten der betrachteten Box herrscht nun ein Sprung vor in den Tiefenwerten zur dahinter liegenden Wand. Auf Grund von Rauschen und den übrigen behandelten Fehlern kann der exakte Übergang zwischen Box und Wand mit der PMD-Kamera nicht originalgetreu dargestellt werden. Es werden stattdessen an der Kante Zwischenwerte ausgegeben, die von einem zum nächsten Zeitpunkt der Betrachtung hin und her springen. Diese springenden Tiefenwerte an Kanten (engl. jumping edges) sind in Abb. 7b zu sehen. Zur Erkennung problematischer Kanten und nachträglichem Aufbereiten der Tiefenwerte gibt es einige Ansätze und Lösungsmethoden. In einem ersten Verarbeitungsschritt wird eine Kantenerkennung im Intensitätsbild durchgeführt. Dieses zweidimensionale Intensitätsbild ergibt sich aus den Amplitudenwerten der PMD-Kamera. Mit Filtern aus der Bildverarbeitung, z.B. einem Gradientenfilter, wird das Bild nach Kanten untersucht. An erkannten Kanten erfolgt ein Vergleich mit den Tiefenwerten und es kann eine Korrektur dieser durchgeführt werden. In [12] wird diese Vorgehensweise noch mit einer Bewegungsvorhersage der Kamera und Analyse über mehrere Zeitschritte hinweg verknüpft, um eine robustere Kantenerkennung zu gewährleisten. Eine andere Lösungsvariante wird von [15] dargestellt, in welcher nach der zweidimensionalen Kantenerkennung versucht wird Flächen in die Tiefendaten zu fitten. Um Messfehler aufgrund von Mehrdeutigkeiten zu reduzieren, wird in dieser Erfindung ein Kalibrierkörper mit einer glatten, sich stetig ändernden Oberfläche ohne Kanten und Sprünge vorgeschlagen. Der Bewegungsraum des Roboters vor dem Kalibrierkörper während der Kalibrierung wird auf d max der jeweiligen Kamera beschränkt. Die Größe d_max wir in der Regel bei jeder Kamera vom Produzenten angegeben.

### 3.1.4 Hardware

Der PMD-Sensor besteht aus vielen Pixeln, die das resultierende Kamerabild ergeben. Da ein Pixel des PMD-Sensors direkt die Laufzeit messen muss, ist er deutlich komplizierter aufgebaut und somit größer als ein Pixel in einer klassischen digitalen Farbbildkamera. Auf Grund dieser hohen Anforderung an die Pixel und den PMD-Sensor in der Kamera ist dieser relativ groß und die Anzahl der Pixel die auf den Sensorchip passen beschränkt. Daraus resultieren Probleme der Erkennung der Translation und Rotation bei einer Hand-Auge-Kalibrierung. Es spielen nicht nur zuvor beschriebene Umweltbedingungen wie z.B. das Sonnenlicht und Reflexionen eine Rolle, sondern auch die Temperatur. In den ausgegebenen Daten der Kamera herrscht eine temperaturabhängige Distanzdrift. Dieser Effekt wird durch Erwärmungsvorgänge der aktiven Infrarotbeleuchtung nach Einschalten der Kamera, Änderung der Integrationszeiten und Änderung der Umgebungstemperatur hervorgerufen. Bei steigender Umgebungstemperatur verstärken sich diese Effekte zusätzlich.

Diese Effekte sind Herstellern solcher Sensoren bekannt, die Korrektur des Temperaturfehlers aber technisch kompliziert und momentan nicht möglich. Da in der Beleuchtungseinheit oder dem Sensor kein Temperatursensor integriert ist, kann nicht auf die vorherrschende Temperaturänderung reagiert werden. Ansätze sollen, laut PMDTec, von anderen Benutzern in dieser Richtung mit externen Temperatursensoren unternommen worden sein. Mit der Hilfe der externen Sensoren, sowie der bekannten Historie der Nutzung der Kamera kann die Distanzdrift vermindert werden. Als erste einfache Maßnahmen wird eine Aufwärmphase der Kamera von mindestens einer Stunde empfohlen sowie eine zusätzliche aktive Kühlung bei steigender Umgebungstemperatur. Auch die Ausleuchtung durch die Kamera mit Infrarotlicht erzeugt messbare Fehler im Ergebnis der Tiefeninformation. Die LEDs der Beleuchtungseinheit besitzen unterschiedliche Anstiegs- und Abfallzeiten des emittierten Infrarotlichtes. Daraus ergibt sich ein asymmetrisches Signalverhalten bei der Ansteuerung der LEDs. Die LEDs der aktiven Beleuchtung werden mit einem sinusähnlichen Signal angesteuert. Auf Grund des beschriebenen Signalverhaltens der LEDs wird ein nicht harmonisches und verzerrtes Infrarotsignal emittiert. Da die Tiefenmessung auf der Phasenverschiebung zwischen empfangenem Signal und einem Referenzsignal beruht, kommt es zu Berechnungsfehlern, weil das Referenzsignal von den LEDs verändert wird. Dieser Effekt (engl. wiggling effect/circular error) wird in [22] erläutert. Der Entfernungsfehler hat ein periodisches Verhalten in Bezug auf die wahre Distanz. Dadurch kann in einer ersten Näherung durch Experimente eine Look-up Tabelle erstellt werden und die Zwischenwerte errechnen sich durch lineare Interpolation. In der Arbeit von [13] wird versucht die LED Charakteristika mathematisch zu erfassen und somit die empfangenen Daten weiter zu verbessern.

### 3.2 Filterung

Die Ausgangsdaten der Tiefenbildkamera sind verrauscht und haben das Problem der zuvor genannten Überbelichtung. Mittels Filterung des Amplitudenbildes und der 3D Punktewolke können Ausreißer beseitigt werden und das Messrauschen reduziert werden. Um Messrauschen zu reduzieren, werden in dieser Erfindung eine Mehrbildaufnahmetechnik (Aufnahme-/Auswerteverfahren) und eine spezielle Filterabfolge (Filterverfahren) vorgeschlagen. Letztere ist auch bei CCD-Kameras sehr vorteilhaft.

### 3.3 Bestimmen der Posenänderung einer Tiefenbildkamera durch Registrierung

Generell kann die Information der Bewegung einer Kamera auch ohne Marker oder weitere Hilfsmittel gewonnen werden. Dazu bieten sich Algorithmen aus dem Themengebiet der Registrierung an. Diese Algorithmen benötigen dazu die 3D Raumkoordinaten der Raumpunkte, die auf die Pixel der Bildfläche der Kamera projiziert werden und eine Punktewolke im Raum ergeben. Diese Punktewolken im Raum werden klassischerweise mit einem Stereokamerasystem rekonstruiert.

Im Vordergrund der Erfindung stehen jedoch Tiefenbildkameras, welche direkt dreidimensionale Koordinaten messen und ausgeben. Die gesuchte Posenänderung einer Tiefenbildkamera wird typischerweise mit dem Iterative Closest Point Algorithmus (ICP-Algorithmus) berechnet. Hierbei wird versucht durch iterative Berechnungsschritte die Transformation zu bestimmen, welche zwei verschobene Punktewolken im Raum aufeinander abbildet. Durch die Minimierung des Abstandsfehlers von Punktkorrespondenzen zwischen zwei Punktewolken, die aus zwei unterschiedlichen Kameraposen aufgenommen wurden, kann die gesuchte Transformation berechnet werden. Der Algorithmus von [3] untersucht den Abstand eines Punktes zur korrespondierenden Fläche in der verschobenen Aufnahme. Parallel zu dieser Betrachtungsweise entwickelten [2] ihren Ansatz. Darin werden die Einzelabstände zwischen allen Punkten betrachtet. Dieser Algorithmus wird als Standard benutzt zur Berechnung einer Kamerabewegung und kann mit einigen Erweiterungen weiter verbessert werden. Diverse Abwandlungen des ICP-Algorithmus sind in [35] beschrieben. Eine wichtige Ergänzung des originalen ICP-Algorithmus ist das Verfahren des Trimmed Iterative Closest Point (TrICP) [41]. In [4] erfolgt eine Beschreibung der Berechnung. Der Vorteil des TrICP ist, dass im Gegensatz zum ICP auch die Verwendung von teilweise überlappenden Aufnahmen zu einem Ergebnis führt. Durch die Auswahl der Punkte, welche in beiden Punktwolken vorhanden sind, kann die Transformation zwischen den Aufnahmen ermittelt werden. [14] versuchen das instabile Verhalten der Lageschätzung mit einer speziellen Punktauswahlstrategie zu vermeiden. Ebenso kann mit dem Verfahren von [7] die mögliche Skalierung von Objekten bei Kamerabewegungen mit einbezogen werden. In der Arbeit von [28] werden weitere Zusätze des ICP-Algorithmus untersucht. Neben der Betrachtung der Punktkorrespondenzen können auch noch weitere Informationen und Daten zur Berechnung der Bewegung der Kamera integriert werden. So wird beispielsweise in [27] aus dem Punktmodell ein Flächenmodell erstellt. Außerdem können weitere Farbkameras, die die gleiche Szene filmen, verwendet werden. Dies gleicht Vor- und Nachteile beider Kameras aus, denn die Farbkamera ist z.B. deutlich hochauflösender als eine aktuelle Tiefenbildkamera. Eine Implementierung kann [17] entnommen werden. Auch artfremde Sensoren werden mit der Tiefenbildkamera vereint. So kann in [26] gezeigt werden, dass durch Inertialsensoren auf der Kamera das Ergebnis verbessert wird. Durch die zusätzlichen Sensoren ist eine erste Annäherung an das Ergebnis möglich und der ICP-Algorithmus berechnet eine stabilere Lösung. Zur Verkürzung der Rechenzeit bei der Implementierung wird der ICP-Algorithmus meist mit einem k-d-Baum beschleunigt. Diese schnelle Rechenweise ist auf Grund einer Umorganisierung der Punkte möglich und wird z.B. in [25] beschrieben. Fehlerquellen bei der Registrierung von Punktewolken: Bei der Registrierung von Punktewolken können drei Fehlerquellen identifiziert werden. 1) Je größer der Überlappungsbereich zwischen zwei Punktewolken und damit je kleiner der Abstand zwischen den Punkten wird, desto eindeutiger kann eine Korrespondenz zwischen beiden Punktewolken erfolgen. Das bedeutet, zu wenig Überlappung führt zu keiner sinnvollen Registrierung. 2) Je größer der Abstand zwischen zwei Punktewolken ist und ein richtiges Korrespondenzfeld vorliegt, desto genauer kann nach der Relativpose aufgelöst werden, da das Signal-zu-Rausch Verhältnis zwischen dem Messrauschen auf dem Korrespondenzfeld und den Werten des Korrespondenzfeldes hoch genug ist, so dass bei der Auflösung nach der Relativpose das Rauschen nur wenig Einfluss hat. Bei kleinen Abständen ist das Signal-zu-Rausch Verhältnis schlecht und das Rauschen wirkt sich negativ auf die Berechnung der Relativpose aus. Dies steht in Konflikt zu Fehlerquelle 1). 3) Falls die Punktewolken Mehrdeutigkeiten in der Struktur aufweisen kann keine eindeutige Korrespondenz mehr gefunden werden und es können bei falscher Zuordnung große Fehler bei der Berechnung der Relativpose auftreten. Eine Verbesserung der Genauigkeit der Posenänderung des Kamerakoordinatensystems einer Tiefenbildkamera durch Fehlerreduktion bei der Registrierung ist Gegenstand der Erfindung. Dazu werden speziell entwickelte Bewegungsabfolgen der Kamera und eine spezielle Art der Kombination von Registrierungsergebnissen und Auflösealgorithmen vorgeschlagen.

### Literaturlegende

[1] Li Aiguo, Wang Lin, and Wu Defeng. Simultaneous robot-world and hand-eye calibration using dual quaternions and kronecker product. International Journal of the Physical Sciences, 5(10):1530-1536, 2010.
[2] P. J. Besl and H. D. McKay. A method for registration of 3-d shapes. IEEE Transactions on Pattern Analysis and Machine Intelligence, 14(2):239-256, 1992.
[3] Y. Chen and G. Medioni. Object modeling by registration of multiple range images. In Proc. Conf. IEEE Int Robotics and Automation, pages 2724-2729, 1991.
[4] D. Chetverikov, D. Svirko, D. Stepanov, and P. Krsek. The trimmed iterative closest point algorithm. In Proc. 16th Int Pattern Recognition Conf, volume 3, pages 545-548, 2002.
[5] W. F. Costa, J. P. Matsuura, F. S. Santana, and A. M. Saraiva. Evaluation of an icp based algorithm for simultaneous localization and mapping using a 3d simulated p3dx robot. In Proc. Latin American Robotics Symp. and Intelligent Robotic Meeting (LARS), pages 103-108, 2010.
[6] F. Dornaika and R. Horaud. Simultaneous robot-world and hand-eye calibration. IEEE Transactions on Robotics and Automation, 14(4):617-622, 1998.
[7] Shaoyi Du, Nanning Zheng, Shihui Ying, Qubo You, and Yang Wu. An extension of the icp algorithm considering scale factor. In Proc. IEEE Int. Conf. Image Processing ICIP 2007, volume 5, 2007.
[8] Samsung Electronics. Hand/auge-kalibrierverfahren und zugeh¨origes punktextraktionsverfahren. DE 10355283A1, 17. Juni 2004.
[9] Samsung Electronics. Hand/eye calibration method using projective invariant shape descriptor of 2-dimensional image. US 7019825B2, United States Patent, 28. M¨arz, 2006.
[10] D. Falie and V. Buzuloiu. Distance errors correction for the time of flight (tof) cameras. In Proc. 4th European Conf. Circuits and Systems for Communications ECCSC 2008, pages 193-196, 2008.
[11] D. Falie and V. Buzuloiu. Further investigations on tof cameras distance errors and their corrections. In Proc. 4th European Conf. Circuits and Systems for Communications ECCSC 2008, pages 197-200, 2008.
[12] Johannes Feulner, Jochen Penne, Eva Kollorz, and Joachim Hornegger. Robust real-time 3d modeling of static scenes using solely a time-of-flight sensor. In Proc. IEEE Computer Society Conf. Computer Vision and Pattern Recognition Workshops CVPR Workshops 2009, pages 74-81, 2009.
[13] Stefan Fuchs and Gerd Hirzinger. Extrinsic and depth calibration of tof-cameras. In Proc. IEEE Conf. Computer Vision and Pattern Recognition CVPR 2008, pages 1-6, 2008.
[14] N. Gelfand, L. Ikemoto, S. Rusinkiewicz, and M. Levoy. Geometrically stable sampling for the icp algorithm. In Proc. Fourth Int. Conf. 3-D Digital Imaging and Modeling 3DIM 2003, pages 260-267,2003.
[15] Peter Gemeiner, Peter Jojic, and Markus Vincze. Selecting good corners for structure and motion recovery using a time-of-flight camera. In Proc. IEEE/RSJ Int. Conf. Intelligent Robots and Systems IROS 2009, pages 5711-5716, 2009.
[16] KUKA Laboratories GmbH. Verfahren und vorrichtung zum bestimmen von position und orientierung einer bildempfangseinrichtung. EP 1521211B1 Europ¨aische Patentschrift, 28. September 2004.
[17] T. Grundmann, R. Eidenberger, R. D. Zoellner, Zhixing Xue, S. Ruehl, J. M. Zoellner, R. Dillmann, J. Kuehnle, and A. Verl. Integration of 6d object localization and obstacle detection for collision free robotic manipulation. In Proc. IEEE/SICE Int System Integration Symp, pages 66-71, 2008.
[18] Sigurj'on ' Arni Guomundsson, Henrik Aanaes, and Rasmus Larsen. Environmental effects on measurement uncertainties of time-of-flight cameras. In Proc. Int. Symp. Signals, Circuits and Systems ISSCS 2007, volume 1, pages 1-4, 2007.
[19] T. S. Huang and A. N. Netravali. Motion and structure from feature correspondences: a review. Proceedings of the IEEE, 82(2):252-268, 1994.
[20] C. Joochim and H. Roth. The indoor slam using multiple three dimension sensors integration. In Proc. IEEE Int. Workshop Intelligent Data Acquisition and Advanced Computing Systems: Technology and Applications IDAACS 2009, pages 500-504, 2009.
[21] L. Jovanov, A. Pizurica, and W. Philips. Wavelet based joint denoising of depth and luminance images. In Proc. 3DTV Conf, pages 1-5, 2007.
[22] T. Kahlmann, F. Remondino, and H. Ingensand. Calibration for increased accuracy of the range imaging camera swissranger. In ISPRS Commission V Symposium 'Image Engineering and Vision Metrology', pages 136-141, 2006.
[23] M. Lindner, A. Kolb, and T. Ringbeck. New insights into the calibration of tof-sensors. In Proc. IEEE Computer Society Conf. Computer Vision and Pattern Recognition Workshops CVPRW '08, pages 1-5, 2008.
[24] Marvin Lindner. Calibration and Real-Time Processing of Time-of-Flight Range Data. PhD thesis, University Siegen, 2010.
[25] Yonghuai Liu. Robust geometric registration of overlapping range images. In Proc. 29th Annual Conf. Of the IEEE Industrial Electronics Society IECON '03, volume 3, pages 2494-2499, 2003.
[26] J. Lobo, L. Almeida, J. Alves, and J. Dias. Registration and segmentation for 3d map building - a solution based on stereo vision and inertial sensors. In Proc. IEEE Int. Conf. Robotics and Automation ICRA '03, volume 1, pages 139-144, 2003.
[27] Xiaohu Ma, Hongbo Tian, Jing Tong, and Zhigeng Pan. A 3d models acquiring method for complex surface objects. In Proc. 2nd Int Information Science and Engineering (ICISE) Conf, pages 3392-3395, 2010.
[28] S. May, D. Droeschel, S. Fuchs, D. Holz, and A. Nuchter. Robust 3d-mapping with time-of-flight cameras. In Proc. IEEE/RSJ Int. Conf. Intelligent Robots and Systems IROS 2009, pages 1673-1678,2009.
[29] A. V. H. Ollikkala and A. J. Makynen. Range imaging using a time-of-flight 3d camera and a cooperative object. In Proc. IEEE Instrumentation and Measurement Technology Conf. I2MTC '09, pages 817-821, 2009.
[30] S. Oprisescu, D. Falie, M. Ciuc, and V. Buzuloiu. Measurements with toe cameras and their necessary corrections. In Proc. Int. Symp. Signals, Circuits and Systems ISSCS 2007, volume 1, pages 1-4, 2007.
[31] F. C. Park and B. J. Martin. Robot sensor calibration: solving ax=xb on the euclidean group. IEEE Transactions on Robotics and Automation, 10(5):717-721, 1994.
[32] Jochen Radmer, Pol Moser Fust'e, Henning Schmidt, and J¨org Kr¨uger. Incident light related distance error study and calibration of the pmd-range imaging camera. In Proc. IEEE Computer Society Conf. Computer Vision and Pattern Recognition Workshops CVPRW '08, pages 1-6, 2008.
[33] Jochen Radmer and J¨org Kr¨uger. Making time-of-flight range imaging cameras applicable for humanmachine-interaction by depth correction. In Proc. 3rd Conf. Human System Interactions (HSI), pages 393-398, 2010.
[34] Holger Rapp. Experimental and theoretical investigation of correlating tof-camera systems, 2007. Diploma Thesis, University of Heidelberg.
[35] S. Rusinkiewicz and M. Levoy. Efficient variants of the icp algorithm. In Proc. Third Int 3-D Digital Imaging and Modeling Conf, pages 145-152, 2001.
[36] D. Schomburg, B. Krebs, and F.M. Wahl. Vollst¨andige fehlerfortpflanzung einer kamera und hand-augekalibrierung. In DAGM Symposium, pages 276-283, 1999.
[37] Y. C. Shiu and S. Ahmad. Calibration of wrist-mounted robotic sensors by solving homogeneous transform equations of the form ax=xb. Transactions on Robotics and Automation, 5(1):16-29, 1989.
[38] K. Strobl and G. Hirzinger. Optimal hand-eye calibration. In Proc. Int. Conf. IEEE on INtelligent Robots and Systems, pages 4647-4653, 2006.
[39] R. Y. Tsai and R. K. Lenz. A new technique for fully autonomous and efficient 3d robotics hand/eye calibration. Transactions on Robotics and Automation, 5(3):345-358, 1989.
[40] Hanqi Zhuang, Z. S. Roth, and R. Sudhakar. Simultaneous robot/world and tool/flange calibration by solving homogeneous transformation equations of the form ax=yb. Transactions on Robotics and Automation, 10(4):549-554, 1994.
[41] D. Chetverikov, D. Svirko, D. Stepanov, and P. Krsek. The Trimmed Iterative Closest Point Algorithm, Int. Conf. On Pattern Recognition,Vol. 3, pages 545-548, 2002.

### Bezeichnungszeichen

- 1): Kalibrierkörper
- 2): Kamera
- 3): Daten der Kamera
- 4): Medianfilter
- 5): Mittelwertfilter
- 6): HDR-Filter
- 7): Amplitudenfilter
- 8): Geometriefilter
- 9): Teilwege 1A bis 2B
- 10): Fernbereich
- 11): Nahbereich

### Aufgabe

Es ist daher die Aufgabe der vorliegenden Erfindung die vorgenannten Nachteile im Stand der Technik, durch Vorsehung eines erfindungsgemäßen Kalibrierkörpers zu vermeiden.

### Lösung der Aufgabe

Diese Aufgabe wird erfindungsgemäß gelöst durch ein Verfahren wie in den Ansprüchen 1-10 definiert.

Der Kern der Erfindung besteht -in Bezug auf die Anwendung der Erfindung, d.h. der erfindungsgemäßen Vorsehungen auf Tiefenbildkameras- darin die Hand-Auge-Kalibrierung von niedrig aufgelösten Tiefenbildkameras ausschließlich durch Auswertung der Tiefen- und Reflexionsinformation zu ermöglichen ohne den ansonsten im Stand der Technik üblichen Einsatz von visuellen 2D Markern zu benötigen.

Die größten Verbesserungen liefert dabei schon der Einsatz des erfindungsgemäßen Kalibrierkörpers.

### Ausführungsbeispiele

Im Folgenden werden der Stand der Technik und die Erfindung in mehreren Ausführungsbeispielen exemplarisch, ohne Anspruch auf Vollständigkeit in den Folgenden Abbildungen und Textpassagen dargestellt und zum Teil nur in Textpassagen beschrieben.

### Abbildungslegende

Es zeigen im Folgenden:
**Fig. 1** Beziehungen zwischen den einzelnen Koordinatensystemen bei der Hand-Auge Kalibrierung.
**Fig. 2** Faro Messarm mit Messspitze (weiße Kugel) und montierter PMD Tiefenbildkamera.
**Fig. 3** Bildausschnitt eines Visuellen Markers (Schachbrettmuster) aufgenommen mit einer normalen hochauflösenden CCD-Kamera (links). Im Verlgeich dazu das Amplitudenbild einer niedrigauflösenden PMD-Tiefenbildkamera des gleichen visuellen Markers (mitte). Am Amplitudenbild der PMD Kamera zeigt eine deutliche Überstrahlung an den Kontrastkansten des visuellen Markers und keine geschlossene Eckpunkte. Die Kanten sind sehr unscharf und die Amplitudenwerte stark verrauscht (mitte und rechts).
**Fig. 4** Schachbrettmuster auf einer ebenen Platte
**Fig. 5** Ausbreitung über mehrere Wege
**Fig. 6** Tiefenbild einer Platte senkrecht zum Fußboden
**Fig. 7** Box vor einer Wand
**Fig. 8** Prototyp eines Kalibrierkörpers mit günstigem 2D Profil. Ein entsprechendes 3D Profil kann angegeben werden.
**Fig. 9** Sichtbereich (aufgeteilt in einen Nah- und Fernbereich) für die Tiefenkamera, in dem die gesamte Oberfläche bzw. Teile des Kalibrierungskörpers vollständig ohne Verdeckung zu sehen sind.
**Fig. 10** Ausschnitt der gemessenen Punktewolke des Prototyps des Kalibrierkörpers
**Fig. 11** Filterkaskade für Tiefenbilder
**Fig.12** Bewegungsschema des Roboters mit mehreren Stationen

Zum Verständnis der Erfindung im Folgenden sind folgende Annahmen als gegeben zu beachten:
1. Eine genügend genaue intrinsische Kalibrierung der Tiefenbildkamera sowie der tiefenabhängigen Offsets z.B. nach [10] oder [13] wird als gegeben vorausgesetzt.
2. Desweiteren werden mögliche Korrelationen zwischen intrinsischen und extrinsischen Parametern, wie sie in [36] beschrieben werden, vernachlässigt.

### 4.1 Kalibrierkörper:

Der Kalibrierkörper hat zum Ziel eine Szene zu erstellen, die von der Tiefenbildkamera aus jeder Blickrichtung gut erkannt werden kann. Des Weiteren soll der Körper alle positiven Eigenschaften und Besonderheiten der Tiefenbildkamera ausnutzen und versuchen die Probleme nach Kapitel 3.1 zu minimieren. Es ergeben sich mehrere Anforderungen an den Körper: einerseits Anforderungen an die Form und andererseits Anforderungen an das verwendete Material.

### Formgebung:

Die Anforderungen an die Form des Körpers begründen sich erneut durch die Besonderheiten der Tiefenbildkamera sowie dem Bewegungsprofil des Roboters. Der Kalibrierkörper ist so aufgebaut, dass die dreidimensionale Formänderung unter allen Ansichten in einem bestimmten Bereich -welcher durch die technischen Vorgaben der Kamera und die Restriktionen der Mehrdeutigkeiten bei einer Registrierung von Tiefenprofilen gegeben ist- keine Mehrdeutigkeiten und keine Verdeckungen aufweist.

Dies muss jedoch zumindest in einem geschlossenen Posenbereich gewährleistet sein, welcher sich durch die Bewegungen bei der Aufnahme im weiter unten dargestellten Aufnahme-/Auswerteverfahren definiert.

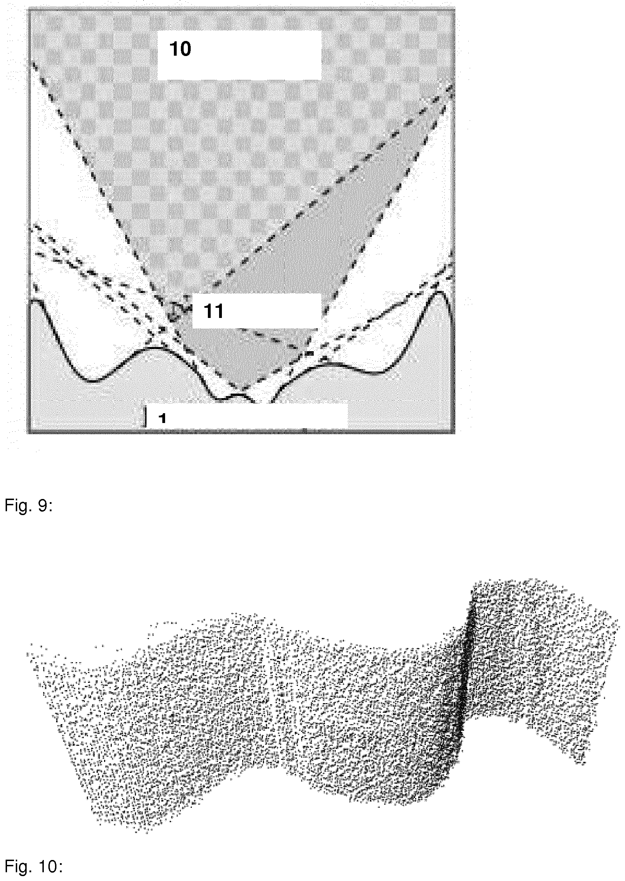

Das Profil muss stetig differenzierbar sein, damit die Körperoberfläche keine Sprünge und Knicke aufweist. Dies wird in Abbildung Abb. 9 verdeutlicht. Hier ist ein Beispiel für ein Profil, daß sich sowohl in der Entfernung, als auch entlang der horizontalen Achse kontinuierlich ändert und keine Wiederholungen in der Form aufweist. Hinsichtlich der Probleme der Tiefenbildkamera mit sog. "jumping edges" sind alle Strukturen am Kalibrierkörper als Rundungen mit großen Radien aufgebaut. Zudem ist durch die konvexe Hüllkurve der polynomialen Formänderung ein zusammenhängender Sichtbereich ohne Verdeckungen erreicht worden. Abbildung Abb. 10 zeigt einen Teil des Kalibrierkörpers als Tiefenbild (Punktewolke) der PMD-Kamera.

In der einfachsten Ausführungsform, weist der erfindungsgemäße Kalibrierkörper in 2 dimensionaler Form, wie in Abb. 8 dargestellt, mindestens einen Hügel auf, welcher aber nicht in der Mitte, bei frontaler Betrachtung, angeordnet ist. In weiteren Ausführungsformen können mehrere Hügel vorgesehen sein, wie etwa 3 Stck. oder 5 Stck., wie in Abb. 8, wobei dann aber der mittlere Hügel der niedrigste sein muss, um die erfindungsgemäße Vorgabe, dass keine Verdeckung erfolgen soll, zu erfüllen.
Die relative Höhe des oder der Hügel zu den benachbarten Tälern oder weiteren Hügeln ergibt sich auch aus dieser Vorgabe und aber auch aus der Beachtung des für die individuelle Kamera bekannten maximalen Abstandes, bzw. Sichtbereiches oder Öffnungswinkels. Bei den meisten Kameras liegt der maximale Abstand (Eindeutigkeit der Phasenmessung) bei einigen Metern (ohne oben genannte Sondermassnahmen der Erweiterung des Eindeutigkeitsbereiches auf bis zu 500mtr). Zudem ist die Oberfläche stetig differenzierbar und weist keine Knicke und Sprünge auf. In einem durch diese Formgebung definierten Bereich kann die Kamera frei bewegt werden und hat immer eine verdeckungsfreie Sicht auf den Kalibrierkörper. Zudem ist das Profil so entworfen, dass keine Mehrdeutigkeiten in der Registrierung (Aufnahme-/Auswertverfahren) auftreten können. Es gibt für alle Profilansichten des Kalibrierkörpers eine eindeutige Zuordnung der aufgenommenen Punktewolken aus unterschiedlichen Ansichten.

In einem weiteren, nicht durch eine Abbildung dargestellten Ausführungsbeispiel, ist der Kalibrierkörper so ausgeführt, dass der mindestens eine Hügel in einem gewissen Bereich entlang der Oberfläche der der Kamera zugewandt ist, definiert (zum Zwecke der exakten Positionsbestimmung) verschoben werden kann. Dieses Ausführungsbeispiel lässt sich besonders gut mit einem konkaven Kalibrierkörper realisieren.

### Material:

Wie bereits im Kapitel zuvor erläutert, ist es sehr wichtig, dass das zu beobachtende Objekt von der Oberfläche und der Farbgebung homogen aufgebaut ist. Somit ist eine Verfälschung und Ablenkung der Infrarotstrahlen deutlich gemindert. Auf Grund dessen besteht der Kalibrierkörper aus einem Material mit homogener Oberflächenstruktur ohne farbige Markierungen. Im Fall des Prototyps (siehe Abb. 8) wurde als erstes Ausführungsbeispiel Ureol als Modelliermaterial verwendet, da daraus beim Fräsen eine glatte Oberfläche mit sehr homogener Struktur entsteht.

In weiteren Ausführungsbeispielen kann der erfindungsgemäße Kalibrierkörper, zumindest an der Oberfläche, aus mattem Papier, Milchglas, gesintertes PTFE, optisches PFTE, gepresstes oder gespachteltes Bariumsulfat oder dem Material der Emmissionflächen von Leuchtdioden und allgemein alle Materialien mit Streuzentren im Bereich der für die Kameras verwendeten Lichtquellen, d.h. im Falle von Infrarotlicht, wie bei Tiefenbildkameras meist üblich also mit Streuzentren im Bereich von Infrarotlicht, bestehen. Ebenso geeignet sind damit alle Polymere in Form von Fliesen oder Textilien, sofern die Fasern so inhomogen aufgebaut sind, dass diese Streuzentren darstellen. Die ideale Oberfläche des erfindungsgemäßen Kalibrierkörpers wäre die eines Lambertschen Strahlers.

### Positionierung:

Der Kalibrierkörper steht in einem bevorzugten Ausführungsbeispiel zudem mit einem Abstand von einem halben Meter vor einer glatten, einfarbig weißen Platte und auf 20cm hohen Füßen, sodass die Kamera zu keiner Zeit weitere störende Objekte filmt oder Messfehler durch Mehrfachreflexion an benachbarten Objekten entstehen können.

### 4.2 Aufnahmetechnik/Signalverarbeitung (Aufnahme-/Auswerteverfahren):

Im Folgenden wird beschrieben, wie, nach der Montage der zu kalibrierenden Kamera auf einen Roboterarm, das Ziel der Kalibrierung der Kamera in Bezug auf deren Koordinatensystem zum Koordinatensystem des Roboters erreicht wird. Dies ist erforderlich, um nach der Kalibrierung den Roboter durch die Kamera zu steuern. D.h. die Tiefenbildkamera soll in die Lage versetzt werden aus den aufgenommenen Bildern und der damit erhaltenen Abstands- oder Lageinformation der Kamera relativ zu vor ihr stehenden Gegenständen, den Roboter so zu steuern, dass dieser mit am Roboter angebrachten Manipulatoren, wie Greifern oder dergleichen, möglichst exakt die vor Roboter und Kamera befindlichen Gegenstände manipuliert. Die Lageinformation der Gegenstände muss also möglichst exakt auf dem Kamerabild ermittelt werden.

Dazu wird der Roboter gemäß dem unter 4.3 -weiter unten- beschriebenen Bewegungsablauf bewegt oder bewegt sich definiert selber.

Ziel des Bewegungsablaufes, als Teil des erfindungsgemäßen Aufnahmeverfahrens, ist es, mehrere Bilder unter verschiedenen Winkeln von dem erfindungsgemäßen Kalibrierkörper zu erhalten.

Die so erhaltenen Bilder, werden als Punktewolken mindestens einem Filterschritt, d.h. mindestens dem weiter unten beschriebenen HDR-Filter unterzogen.

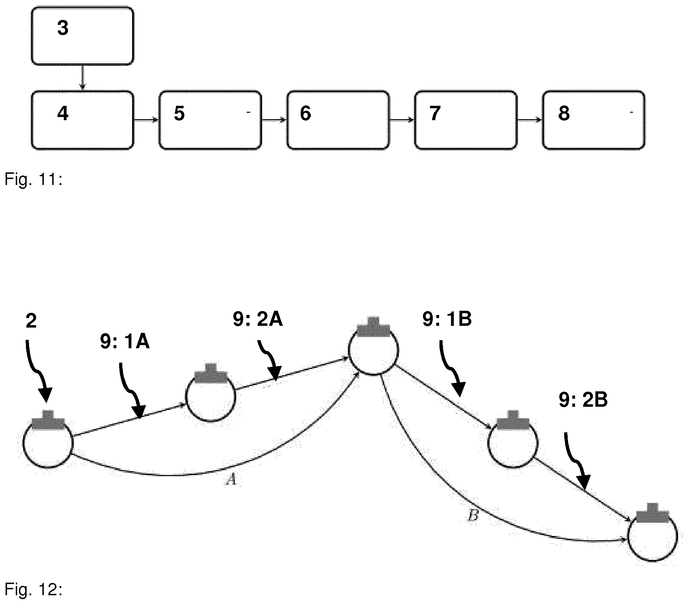

In einem vorteilhaften, weiteren Ausführungsbeispiel des beispielhaften Filterverfahrens, kann die in Abb. 11 dargestellte Filterkaskade zur Verarbeitung der Daten der Kamera, welche während des erfindungsgemäßen Bewegungsablaufes aufgenommen wurden, vorgesehen sein. D.h. zuerst wird der Medianfilter (4), dann der Mittelwertfilter (5) und dann der den Kern der Erfindung bildende HDR-Filter (6), sowie nachfolgend der Amplitudenfilter (7) und Geometriefilter (8) angewendet.

Die so, durch
1) den erfindungsgemäßen Bewegungsablauf und
2) das beispielgemässe Filterverfahren, umfassend mindestens den HDR-Filter oder auch weitere Teile bis zur ganzen, unter Abb. 11 dargestellten Filterkaskade gewonnenen und verarbeiteten Bildsignale, in Form von "Punktewolken" für jede Aufnahme der Kamera an jedem Standort des Bewegungsablaufs, werden dann benutzt, um die Posenveränderung (Lageveränderung) der Kamera im Raum zu bestimmen. Aus dieser wiederum kann der Fehler der Unterschiede zwischen dem Koordinatensystem der Kamera und dem des Roboters ermittelt werden und durch entsprechende Rotations- und Translationswerte korrigiert werden. Danach ist die Kamera -mit deren Koordinatensystem- aufgrund der eigenen Bildauswertung in der Lage den Roboter zu steuern, möglichst weitestgehend ohne dass die vom Roboter zu manipulierenden Gegenstände, etwa durch Kollisionen aufgrund falscher Abstandsinformationen der Kamera, zerstört werden.

Zur Bestimmung der Transformation der Kamera (also des exakten Weges der Kamera beginnend von Ausgangspunkt) wird der sog. ICP-Algorithmus (Interative Closest Point oder eigentlich besser Iterative Corresponding Point) verwendet.

Der Kern des ICP-Algorithmus bildet: Für die Punktwolken werden Koordinatentransformationen so bestimmt, dass die Abstände zwischen den Punktwolken minimiert werden. Dazu wird für jeden Punkt aus der einen Punktwolke der jeweils nächste Punkt (closest point) aus der anderen Punktwolke bestimmt. Die Summe der Quadrate der Abstände wird durch Anpassung der Transformationsparameter minimiert. Dieser Vorgang geschieht iterativ so lange, bis das Optimum gefunden ist. Damit ist dann die Koordinatentransformation von einem Aufnahmepunkt der Kamera zum nächsten zu berechnen. Vergleicht man die Transformationen der Kamera (in deren Koordinatensystem) mit denen des Roboters (in dessen Koordinatensystems) kann man die Fehler zwischen beiden ausgleichen und damit das übergeordnete Ziel, die spätere -und möglichst exakte- Steuerung des Roboters (Hand) durch die Kamera (Auge) oder Hand-Auge-Kalibrierung erreichen.

### 4.2 Aufnahmetechnik/Signalverarbeitung

Bevor der ICP-Algorithmus mit den Tiefenwerten der Kamera eine Bewegung der Kamera berechnen kann müssen die verrauschten Ausgangsdaten gefiltert werden. Hierzu werden eine spezielle Aufnahmetechnik und eine Filterabfolge entworfen, um die Fehler der Tiefenbildkamera auszugleichen. In der Fotografie besteht bereits ein Aufnahmeverfahren, um den Dynamikumfang in einem normalen Intensitätsbild anzugleichen. Bei dieser Technik handelt es sich um das Erzeugen von sog. Hochkontrastbildern, auch High Dynamic Range Images (kurz HDR-Bild) genannt. Das Grundprinzip ist, dass ein Bild mit erhöhtem Dynamikumfang erzeugt wird und somit alle in der Natur vorkommenden Helligkeitsstufen erfasst werden. Das Ziel ist die Vermeidung von Über- oder Unterbelichtung des Bildes bzw. Teilen davon.

Es existieren Spezialkameras, welche direkt solche HDR-Bilder erzeugen können. Um mit einer handelsüblichen digitalen Fotokamera solche HDR-Aufnahmen zu realisieren, wird ein simpler Trick angewendet, um zu vergleichbaren Ergebnissen zu gelangen. Hierbei wird eine identische Szene mehrmals aus der gleichen Perspektive fotografiert und jeweils die Belichtung der Kamera verändert. Zur Erzeugung des HDR-Bildes werden die Einzelbilder zusammengeführt.

Die Idee der beschriebenen Technik wird in dieser Arbeit zur Lösung des Problems der Überbelichtung durch die aktive Infrarotbeleuchtung einer Tiefenbildkamera bei unterschiedlich reflektierenden Oberflächen angepasst. Es werden von einer Szene m Bilder erstellt mit jeweils unterschiedlichen Integrationszeiten.

### HDR-Filter:

Den Kern des beispielhaften Aufnahme- und Auswerteverfahrens bildet der im Folgenden dargestellte HDR-Filter alleine. Dazu, wird im vorgeschlagenen Verfahren, als Entscheidungskriterium, welcher Amplitudenwert und Tiefenwert am geeignetsten ist, die Amplitude a(p,m) des empfangenen Signals zu allen m Integrationszeiten über alle Pixel p herangezogen. Mit Hilfe dieser Informationen können die Einzelbilder zu einem Gesamtbild zusammengeführt werden. Dabei wird für jeden Pixel der Tiefenwert t(p,m) extrahiert, dessen Amplitudenwert a(p,m) von allen m Aufnahmen dem Mittelwert a aller Amplitudenwerte a = sum_p sum_m a(p,m) am nächsten liegt, wobei m = argmin_m |a(p,m)-a|.

### Amplitudenfilter:

Ergänzend zum HDR-Filter kann der nachfolgend beschriebene Amplitudenfilter eingesetzt werden.

Da die PMD-Kamera neben den Tiefeninformationen auch den Amplitudenwert für jedes Pixel bereitstellt, kann diese Information ebenfalls ausgewertet werden. Ist die Amplitude sehr niedrig, so kann die Tiefenberechnung fehlerhaft sein an dieser Stelle. Dies begründet sich aus der Tatsache, dass wenig Licht empfangen wird, dass ausgewertet werden kann. Sobald Sättigung im PMD-Chip eintritt, ist der Amplitudenwert sehr hoch und die Tiefenberechnung kann mit Fehlern behaftet sein. Aus dieser Gesetzmäßigkeit wird ein Filter mit oberer und unterer Schranke für Amplitudenwerte erstellt, der potentiell fehlerhafte Pixel entfernt.

Hierbei wird davon ausgegangen, dass die m Aufnahmen des HDR Filters die Integrationszeiten so ausschöpfen, dass bei minimaler Integrationszeit auf jeden Fall Unterbelichtung auftritt und bei maximaler Integrationszeit auf jeden Fall Überbelichtung auftritt, also die Grenzbereiche auch in den HDR Aufnahmen enthalten sind. Über- und Unterbelichtete Pixel werden aus der Punktwolke gestrichen.

D.h., falls dieser so ausgewählte Amplitudenwert a(p,m) größer als die obere Schwelle 0.95 x a_max beträgt, wird er als überbelichtet gewertet. Falls dieser so ausgewählte Amplitudenwert a(p,m) kleiner als die untere Schwelle 1.05 x a_min beträgt, wird er als unterbelichtet gewertet. Hierbei sind a_max der maximale Amplitudenwert und a_min der minimale Amplitudenwert aller m Aufnahmen.
Es ergibt sich ein Tiefenbild t(p,m) aus dem Amplitudenbild a(p,m) mit verbessertem Dynamikumfang für entfernte und nahe Objekte

In einem weiteren Ausführungsbeispiel des Aufnahme-/Auswerteverfahrens ist vorgesehen, um Mess-Ausreißer und Messrauschen weiter zu reduzieren, wird zusätzlich für jede Integrationszeit ein Set an n-Aufnahmen bei fixer Pose aufgenommen.

### Medianfilter:

Ein Mittelwert- und ein Medianfilter kann -in einem weiteren Ausführungsbeispiel des oben dargestellten HDR-Filters- werden dann auf diese Aufnahmen bei konstanter Kameraposition angewendet. Hierbei durchsucht der Medianfilter in jeder der n Aufnahmen der aktuellen Szene die Bildinformationen und verändert die Ausgangsdaten dahin gehend, dass die Tiefenwerte eines jeden Pixels p durch den Median in einer z.B. 3x3 Nachbarschaft um den Pixel ersetzt werden. Die Filtergröße hängt von der Auflösung der Kamera ab und bewegt sich typischerweise zwischen 3x3-7x7. Damit werden noch bestehende Ausreißer, die nicht unter oder überbelichtet sind, aber dennoch "Aussreisser sind" werden durch den Median ersetzt.

### Mittelwertfilter:

Auf die nun, von Ausreißern entfernten, gefilterten Daten wird ein zeitlicher Mittelwertfilter entlang aller n Aufnahmen über alle Tiefenwerte angewendet.

### Geometriefilter:

Ist das Einsatzgebiet der Kamera auf einen bestimmten Bereich eingegrenzt, so kann auch diese zusätzliche Information benutzt werden. Da der Roboter auf dem Fußboden eingesetzt wird, filmt die PMD-Kamera Teile von diesem. Ebenso werden hohe Objekte der Umgebung aufgenommen. Für die Kalibrierung ist lediglich der speziell angefertigte Kalibrierkörper von Bedeutung. Somit werden in einem Filter hohe Objekte, sowie der Fußboden herausgeschnitten. Störende Objekte im Hintergrund, die ohnehin schlecht detektiert werden können, werden dementsprechend in der folgenden Auswertung nicht beachtet. Als resultierendes Bild ergibt sich ausschließlich der Testkörper.

Zusammenfassung: An einem Standort der Kamera werden mehrere Bilder der gleichen Szene mit unterschiedlichen Integrationszeiten gemacht.

Im nächsten wird dann der oben beschriebene HDR-Filter angewandt.

In einem weiteren Ausführungsbeispiel -in dem alle oben genannten Filter, insbesondere der HDR-Filter- angewendet werden- werden an jedem Standort der Kamera für jeden der unterschiedlichen Integrationszeiten n Aufnahmen mit gleicher Integrationszeit und dann entsprechend der Median und der Mittelwertfilter -wie oben beschrieben- angewendet.

Nachfolgend wird dann der oben beschrieben HDR-Filter angewendet und der oben beschriebene Amplituden- und Geometriefilter. Dabei prüft der oben beschriebene Algorithmus "selbstständig" durch Analyse der Amplitudenwerte, ob die Szene bei der aktuellen Einstellung der Integrationszeit überbelichtet ist und passt diese an (siehe oben). Diese einzelnen Bilder werden mit einem räumlichen Medianfilter von Ausreißern befreit und durch einen zeitlichen Mittelwertfilter geglättet.

Durch die HDR-Technik mit Veränderung der Integrationszeiten kann ein erhöhter Dynamikumfang der Bilder erreicht werden. Dies bedeutet, dass auch weiter entfernte Objekte gut dargestellt werden. Im Anschluss werden mit einem Amplitudenfilter fehlerhafte Pixel im Bild entfernt. Das resultierende gefilterte Bild wird mit einem Geometriefilter so zugeschnitten, dass lediglich der Kalibrierkörper übrig bleibt. Wände und der Fußboden, die keine aussagekräftigen Informationen für die Registrierung enthalten, werden demnach aus den Bilddaten entfernt. Die Filterkaskade ist in Abb. 11 schematisch dargestellt.

### 4.3 Bewegungsablauf

Auf die nach einer zufälligen oder gesteuerten oder geregelten Bewegung erhaltenen Daten wird zunächst zumindest der oben beschriebene HDR-Filter angewendet. Auf die so gefilterten Daten wird der ICP-Algorithmus angewendet. Durch die Bewegung des Roboters durch den Benutzer oder dessen eigene Bewegung, welche auf dem hier beschriebenen Verfahren für den Bewegungsablauf basieren kann, besteht keine vollständige Überlappung zwischen zwei Aufnahmen. Zusätzlich kann die Größe der Punktmenge wegen der Filterung variieren. Infolgedessen kommt die Erweiterung des TrICP-Algorithmus zum Einsatz. TrICP steht dabei für "Trimmed" ICP. Im Zuge der Berechnung muss der Überlappungsfaktor zwischen beiden Aufnahmen bestimmt werden. Dazu gibt es einige Verfahren in der Literatur, die aber nicht immer gute Ergebnisse erzeugen, da sie sich ausschließlich auf die Punktdaten stützen.

Für den in dieser Arbeit vorliegenden Fall, dass die Kamera auf dem Roboter montiert ist, ergeben sich folgende, -erfinderische- weitere Möglichkeiten. Der Roboter und die Kamera sind starr miteinander verbunden. Deswegen kann davon ausgegangen werden, dass eine Bewegung des Roboters eine ähnliche Bewegung der Kamera zur Folge hat.

Somit können die Odometrie- und Rotationsdaten des Roboters als Anhaltspunkt für den TrICP-Algorithmus verwendet werden.

Zur Berechnung des Überlappungsfaktors werden iterativ Faktoren vorgegeben und der TrICP-Algorithmus berechnet die Transformation der Kamera. Die Faktoren dazu werden typischerweise absteigend, beginnend von 1.0=vollständige Überlappung bis zu 0.5=50-prozentige Überlappung in 0.1 Schritten durchlaufen. Es wird also von einer hohen Überlappung ausgegangen und diese sukzessive bei jedem Iterationsschritt verringert. Nach jedem Durchlauf erfolgt ein Abgleich durch Nutzung von Rotation und Translation der gefundenen Transformation mit den Daten der Odometrie des Roboters. Ob eine Transformation geeignet ist, wird durch den mittleren quadratischen Abstand der Punktkorrespondenzen des ICP bestimmt, dem mittleren Fehler. Überschreitet dieser Abstand einen bestimmten Schwellwert, typischerweise 2mm, dann wird das Ergebnis verworfen und dient nur als Initalisierung für die Berechnung mit dem nächst niedrigeren Überlappungsfaktor. Diese Vorgehensweise ist zwar rechenintensiv, liefert aber bessere Ergebnisse als Berechnungsmethoden ohne Einbeziehung des mittleren Fehlers. Mit dem ermittelten Überlappungsfaktor wird nun erneut die Transformation berechnet. Um ein möglichst genaues Ergebnis des TrICP-Algorithmus zu erhalten, muss versucht werden das Konvergieren in ein lokales Minimum zu vermeiden. Eine verwendete Möglichkeit ist eine 2-Schritt-Lösung. Dazu wird im ersten Berechnungsschritt eine Transformation bestimmt. Für den zweiten Schritt werden die Ausgangsdaten mit diesem Ergebnis transformiert. Die Transformation geschieht über eine 3D Koordinatentransformation der im ersten Schritt berechneten Rotation und Translation. Abschließend sollte bei einem erneuten Durchlauf des Algorithmus das Ergebnis bedeuten, dass die Transformation gleich Null ist. Falls dem nicht so ist, war die erste Transformation ein lokales Minimum. Das neu berechnete Ergebnis hat folglich eine erhöhte Wahrscheinlichkeit näher am globalen Minimum, also der korrekten Transformation, zu liegen.

Zusätzlich zur 2-Schritt-Strategie können -in einer weiteren Ausführungsform- die Odometriedaten zur Berechnung der Transforamtion der Kamera verwendet werden. Die Ausgangsdaten werden anhand der Odometriedaten transformiert. Darauf folgt die Berechnung mit dem TrICP-Algorithmus. Auf Grund der ähnlichen Bewegungsrichtung von Roboter und
Kamera erhöht sich durch dieses Vorgehen die Wahrscheinlichkeit das globale Minimum zu finden. Der TrICP-Algorithmus gibt nach jeder Berechnung den resultierenden Fehler aus. Diese Information kann zusätzlich in der weiteren Berechnung berücksichtigt werden um eventuell fehlerhafte Ergebnisse der Registrierung nicht weiter zu benutzen.

Zur Lösung des Gleichungssystems werden mehrere Wege abgefahren und die jeweiligen Transformationen von Kamera und Roboter benutzt. Um genaue Ergebnisse zu erhalten sind Wege mit großen Entfernungen von Vorteil. Da jedoch große Entfernungen des Roboters mit der darauf montierten Kamera zu ungenauen Daten führen wird folgend eine Zusammenfassung von Einzelwegen dargestellt.

Der Roboter bewegt sich über mehrere Stationen mit kurzen Entfernungen in eine Bewegungsrichtung. Die einzelnen Bewegungen können ausgewertet werden und enthalten wenige Fehler. Nach einer festgelegten Anzahl von Stationen werden die Teilergebnisse zu einem Weg aufsummiert und der Posenberechnung übergeben. Darauf folgend wird die Bewegungsrichtung geändert und erneut mehrere Stationen abgefahren zur Erzeugung eines weiteren Weges. Dieses Schema ist in Abb. 12 für zwei Wege (A und B) mit jeweils zwei Teilwegen (1 und 2)
dargestellt.

In einem nicht graphisch dargestellten Ausführungsbeispiel ist vorgesehen, den Kalibrierkörper im Sinne der Kalibrierung definiert an einem mobilen Grundkörper anbringbar vorzusehen und die Kamera an einem gegen diesen mobilen Grundkörper definiert beweglichen Teilkörper anzubringen. Etwa den Kalibrierkörper an einem Roboter-Grundkörper anbringbar vorzusehen. Und die Kamera an einem gegen diesen Grundkörper definiert beweglichen Teil des Roboters, wie etwa an dessen Roboterarm so anzubringen, d.h. etwa passend zu d_max der Kamera oder/und deren Öffnungswinkel, dass eine Kalibrierung oder Re-Kalibrierung der Kamera relativ zum Roboterarm oder Roboter-Grundkörper, auch am Ort des Betriebs des Roboters möglich ist.

In einem ganz besonders vorteilhaften Ausführungsbeispiel ist vorgesehen, das obige Ausführungsbeispiel in einem Zusatzmodul, passend zur Zwischenkalibrierung am Arbeitsort des Roboters mit oder ohne einer Aussenlicht vermeidenden Verkleidung des Kalibrierkörpers so auszuführen, dass die Kamera auch dann den Kalibrierkörper von mehreren Positionen aus aufnehmen kann.

## Patentansprüche

1. Verfahren zur Kalibrierung von Kameras (2) auf mobilen Systemen mit einem dreidimensionalen Kalibrierkörper (1), wobei die Kameras als sogenannte Tiefenbildkameras mit einer Aufnahme auch Tiefeninformationen der aufgenommenen Objekte liefern, dadurch gekenntzeichnet, dass der Kalibrierkörper (1) an den zur Kalibrierung genutzten Stellen, im Bereich und oberhalb des Auflösungsbereich der zur Beleuchtung des Kalibierkörpers (1) eingesetzten Wellenlängenbereiches, ein stetig differenzierbares Oberflächenprofil aufweist und im Bereich der genutzten Stellen mindestens einen im Schnitt, zumindest in einer Ausrichtung, unsymmetrischen Hügel aufweist.

2. Verfahren nach Anspruch 1, **dadurch gekennzeichnet, dass** der Kalibrierkörper (1) mehrere Hügel aufweist, wovon der mittlere Hügel der niedrigste Hügel ist.

3. Verfahren nach einem der Ansprüche 1 oder 2, **dadurch gekennzeichnet, dass** die Oberfläche in mindestens einer Achse keine Wiederholung der Form aufweist.

4. Verfahren nach einem der Ansprüche 1 bis 3, **dadurch gekennzeichnet, dass** die gewählten Krümmungsradien der Oberfläche des Körpers (2) in Zusammenschau mit der Wellenlänge, derfürdie Beleuchtung des Kalibrierkörpers (1) verwendeten Wellenlängen, so gewählt sind, dass keine Verdeckungen von Bereichen der Oberfläche bei Betrachtung durch die Kamera (1) auftreten.

5. Verfahren nach einem der Ansprüche 1 bis 4, **dadurch gekennzeichnet, dass** die Oberfläche des Körpers (1) so strukturiert oder bearbeitet gewählt ist, dass in Zusammenschau mit den gewählten Wellenlängen für die Beleuchtung durch die Kamera (2), etwa durch Vorsehung von Streuzentren, so ausgebildet ist, dass die Oberfläche möglichst nah dem Ideal eines Lambertschen Strahlers entspricht.

6. Verfahren nach einem der Ansprüche 1 bis 5, **dadurch gekennzeichnet, dass** die Oberfläche des Körpers (1) eine weitgehend homogene Farbgebung aufweist.

7. Verfahren nach einem der Ansprüche 1 bis 6, **dadurch gekennzeichnet, dass** die Oberfläche des Köpers (1) aus Ureol, mattem Papier, Milchglas, gesintertem PTFE, optischem PFTE, oder gespachteltem Bariumsulfat oder dem Material der Emmissionflächen von Leuchtdioden, oder Vliesen oder Textilien aus Polymeren mit geeigneten Streuzentren gefertigt ist.

8. Verfahren nach einem der Ansprüche 1 bis 7, **dadurch gekennzeichnet, dass** der Kalibrierkörper (1) auf der der Kamera (2) abgewandten Rückseite mit Abstandshaltern der Länge von rund 10 bis 100cm, bevorzugt rund 50 cm, angebrachte einfarbige, vorzugsweise weiße Platte aufweist, welche am Rand über die seitliche Ausdehnung des Kalibrierkörpers (1) hinausragt oder der Kalibrierkörper (1) definiert mit einem Roboter, vorzugsweise Roboterarm verbindbar, und definiert gegen diesen oder/und die Kamera (2) definiert bewegbar und rotierbar ausgeführt ist.

9. Verfahren nach einem der Ansprüche 1 bis 8 zur Hand-Auge-Kalibrierung von, als Stereo-Kamerasystem realisierten, Tiefenbildkameras, insbesondere solchen mit CCD-Chips.

10. Verfahren nach einem der Ansprüche 1 bis 8, **dadurch gekennzeichnet, dass** der Kalibrierkörper (1) an einem Grundkörper eines mobilen Systems, etwa eines Roboters, befestigt ist und eine Tiefenbildkamera an einem beweglichen Teil des mobilen Systems, etwa an einem Arm, angebracht ist.

## Claims

1. Process for calibration of cameras (2) on mobile systems with a three-dimensional calibrating body (1) whereby the cameras, as so-called deep-picture cameras, also provide depth-related information of the photographed objects **characterised in that** the calibrating body (1) provides a continuous differentiating surface profile at the places to be calibrated in the region and above the resolution area of the wavelength area of the calibrating body to be illuminated and in the region of the used places at least one in section provides un-symmetrical mounds in at least one direction.

2. Process for calibration of cameras (2) on mobile systems with a three-dimensional calibrating body (1) whereby the cameras, as so-called deep-picture cameras, also provide depth-related information of the photographed objects according to claim 1 **characterised in that** the calibrating body (1) exhibits several mounds whereby the middle mound is the lowest mound.

3. Process for calibration of cameras (2) on mobile systems with a three-dimensional calibrating body (1) whereby the cameras, as so-called deep-picture cameras, also provide depth-related information of the photographed objects according to claims 1 or 2 **characterised in that** the surface in at least one axis does not have a repeat of the form.

4. Process for calibration of cameras (2) on mobile systems with a three-dimensional calibrating body (1) whereby the cameras, as so-called deep-picture cameras, also provide depth-related information of the photographed objects according to one of the claims 1 to 3 **characterised in that** the selected curvature gradients of the surface of the body (2) in conjunction with the wavelength, the wavelengths selected for the illumination of the calibrating body (1), are selected such that there are no coverings of the regions of the surface when viewed through the camera. (1).

5. Process for calibration of cameras (2) on mobile systems with a three-dimensional calibrating body (1) whereby the cameras, as so-called deep-picture cameras, also provide depth-related information of the photographed objects according to one of the claims 1 to 4 **characterised in that** the surface of the body (1) is structured or worked such that in conjunction with the selected wavelength for the illumination by the cameras (2), something similar to provision of scatter centres is formed such that the surface is as near to the ideal of the Lambert radiation as possible.

6. Process for calibration of cameras (2) on mobile systems with a three-dimensional calibrating body (1) whereby the cameras, as so-called deep-picture cameras, also provide depth-related information of the photographed objects according to one of the claims 1 to 5 **characterised in that** the surface of the body (1) possesses a mostly homogeneous colour,

7. [Process for calibration of cameras (2) on mobile systems with a three-dimensional calibrating body (1) whereby the cameras, as so-called deep-picture cameras, also provide depth-related information of the photographed objects according to one of the claims 1 to 6 **characterised in that** the surface of the body (1) s made of Ureol, mat paper, frosted glass sintered PTFE, optical PTFE or smoothed barium sulphate or the material of the emission surfaces of light emitting diodes, or fleece or textiles or polymers with suitable scatter centres.

8. Process for calibration of cameras (2) on mobile systems with a three-dimensional calibrating body (1) whereby the cameras, as so-called deep-picture cameras, also provide depth-related information of the photographed objects according to one of the claims 1 to 7 **characterised in that** the calibrating body (1) on the side opposite the rear of the camera (2) there are spacer supports in length of about 10 to 100 cm. preferable around 50 cm, of a single colour, preferably white plate that protrude at the edge over the side extension of the calibrating body (1) or the calibrating body (1) defined with a robot, preferably robot arm and defined against this and/or the camera (2) defined movably and rotatable.

9. Process for calibration of cameras (2) on mobile systems with a three-dimensional calibrating body (1) whereby the cameras, as so-called deep-picture cameras, also provide depth-related information of the photographed objects according to one of the claims 1 to 8 for hand-eye calibration of deep-picture cameras designed as stereo cameras especially those with CCD chips.

10. Process according to one of the claims 1 to 8 **characterised in that** the calibrating body (1) is attached to a base body of a mobile system such as a robot and that a deep-picture camera is attached to a movable part of a the mobile system such as an arm.

## Revendications

1. procédé de calibrage de caméras (2) sur systèmes mobiles avec un corps de calibrage en trois dimensions (1), les caméras étant des caméras à image de profondeur délivrant un enregistrement des informations de profondeur sur les objets filmés étant **caractérisé par le fait que** l'élément de calibrage (1) utilisé aux points de calibrage, dans la zone et au-dessus de la plage des longueurs d'ondes de l'éclairage du corps de calibrage (1) ait un profil de surface continuellement différenciable et présente un cône asymétrique dans la zone des points utilisés, au moins dans la section, en tous les cas dans une direction.

2. Procédé selon l'exigence 1 étant **caractérisé par le fait que** le corps de calibrage (1) présente plusieurs cônes, et que le cône central est le moins élevé.

3. Procédé selon les exigences 1 ou 2 étant **caractérisé par le fait que** la surface sur un axe au moins ne présente pas de répétition de la forme.

4. Procédé selon les exigences 1 à 3 étant **caractérisé par le fait que** les rayons de courbure choisis de la surface du corps (2) en conjonction avec la longueur d'ondes qui est utilisée pour l'éclairage du corps de calibrage (1), sont choisis de façon à ce qu'aucune occultation dans la zone de la surface examinée par la caméra (1) ne soit présente.

5. Procédé selon les exigences 1 à 4 étant **caractérisé par le fait que** la surface du corps (1) qui est choisie ainsi structurée et traitée de sorte qu'en conjonction avec des longueurs d'ondes choisies pour l'éclairage produit par la caméra (2), en prévoyant les centres de diffusion, soit ainsi formée, de telle manière à ce que la surface corresponde au plus près à l'idéal pour un émetteur lambertien.

6. Procédé selon les exigences 1 à 5 étant **caractérisé par le fait que** la surface du corps (1) présente en grande partie une couleur homogène.

7. Procédé selon les exigences 1 à 6 étant **caractérisé par le fait que** la surface du corps (1) soit faite en uréol, de papier mat, de verre laiteux, de PTFE fritté, de PTFE optique, ou d'un masticage de sulfate de baryum ou de matériau de surface d'émission de diodes électroluminescentes, ou de non-tissé ou de textiles de polymères avec des centres de diffusion appropriés.

8. Procédé-selon les exigences 1 à 7 étant **caractérisé par le fait que** le corps de calibrage (1) sur la face arrière de la caméra (2) soit fait d'une plaque de couleur unie, blanche de préférence, maintenue par des écarteurs, à une distance de 10 à 100 cm, de préférence à 50 cm, dont le bord situé au-dessus du prolongement latéral du corps de calibrage (1) déborde ou le corps de calibrage (1) défini par un robot de préférence le bras d'un robot connectable-et/ou contre lequel cette caméra (2) est fixée de manière à permettre un déplacement et une rotation.

9. Procédé selon les exigences 1 à 8 pour le calibrage oeil-main de système de caméras stéréo, en tant que caméra à image de profondeur, en particulier celles avec des puces CCD.

10. Procédé selon les exigences 1 à 8 **caractérisé par le fait que** le corps de calibrage (1) est fixé sur le corps de base d'un système mobile, un robot, et qu'une caméra à image de profondeur est montée sur une partie mobile du système mobile entre-autres à un bras.
